(19) Europäisches Patentamt / European Patent Office / Office européen des brevets

(11) **EP 2 427 001 B1**

(12) **EUROPEAN PATENT SPECIFICATION**

(45) Date of publication and mention
of the grant of the patent:
**06.11.2013 Bulletin 2013/45**

(51) Int Cl.:
*H04W 52/02* *(2009.01)*  *H04W 72/12* *(2009.01)*
*H04W 88/02* *(2009.01)*

(21) Application number: **10175525.4**

(22) Date of filing: **07.09.2010**

(54) **Controlling an uplink data transmission of a communication device**

Steuerung einer Aufwärtsstreckendatenübertragung einer Kommunikationsvorrichtung

Contrôle des transmissions de données en liaison montante dans un dispositif de communications

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**07.03.2012 Bulletin 2012/10**

(73) Proprietor: **Telefonaktiebolaget L M Ericsson
(Publ)
164 83 Stockholm (SE)**

(72) Inventors:
• **Lerzer, Jürgen
92318 Neumarkt/OPf (DE)**

• **Stobart, Christopher
90479 Nürnberg (DE)**

(74) Representative: **Neuerburg, Gerhard et al
Ericsson GmbH
Patent Department
Ericsson Allee 1
52134 Herzogenrath (DE)**

(56) References cited:
**EP-A1- 1 755 236       EP-A1- 1 777 879
WO-A1-2010/127725   US-A- 6 064 857
US-A1- 2004 204 181   US-A1- 2004 240 416
US-B1- 6 760 311**

**Description**

BACKGROUND

The present invention relates to the field of mobile communications.

Emerging communication technologies such as E-UTRA (Evolved UMTS Terrestrial Radio Access) or UTRA (UMTS Terrestrial Radio Access) or 3GPP LTE (Long Term Evolution) are designed to support mobile communications upon the basis of mobile user equipment (UE), e.g. mobile terminals or handset devices. In this regard, the development of UE devices such as mobile terminals or hand sets for communicating over radio communication networks is subject to improvements reflecting certain technology trends. One technology trend is to reduce weight and size of the UE which results in a need for smaller energy sources, e.g. batteries. Another technology trend is to provide more and smarter functions within the UE which is often associated with an increased consumption of electrical power. Even though the energy source development has brought increasingly powerful batteries, the UE power consumption is a critical parameter especially with regard to high data rate UEs which, by way of example, are suitable for UTRAN (UMTS Terrestrial Radio Access Network) and E-UTRAN (Evolved UMTS Terrestrial Radio Access Network). The energy consumption is further affected by limitations with respect to thermal energy dissipation, which may be an important aspect with respect to power consumption in current and future UE technologies.

In the following, by way of example and without limiting the invention, technological background, problems and solutions with respect to power consumption are described by focusing on the LTE technology.

Recently, the LTE project focused on enhancing the Universal Terrestrial Radio Access (UTRA) and optimizing 3GPP's radio access architecture. Targets were to have average user throughput of three- to four-times the Release 6 HSDPA levels in the Downlink (100Mbps), and two to three times the HSUPA levels in the Uplink (50Mbps). The LTE of the 3rd generation radio access technology - "E-UTRA" - progressed from the feasibility study stage to the first issue of approved Technical Specifications. Orthogonal Frequency Division Multiplexing (OFDM) has been selected for the Downlink and Single Carrier-Frequency Division Multiple Access (SC-FDMA) for the Uplink. The Downlink will support data modulation schemes QPSK, 16QAM, and 64QAM and the Uplink will support BPSK, QPSK, 8PSK and 16QAM. LTE's E-UTRA deploys a number of defined channel bandwidths between 1.25 and 20 MHz in contrast to the UTRA's fixed 5 MHz channels).

The uplink (UL) transmission of the LTE system is usually performed with a 1 ms granularity, i.e. the UL transmission time interval (TTI) for LTE is 1 ms. The UE receives the information in subframe x about the amount of data to be send in subframe x+4. Before the actual transmission the UE creates the uplink data blocks and sends them out at subframe x+4 with the indicated transmission power.

In order to implement UE devices employing the LTE technology, a mobile terminal architecture enabling an integration of the LTE technology into future mobile phones, data cards and other devices requiring wireless connectivity based on high data rates like e.g. cameras, PDAs (Personal Digital System), TVs (Television) etc. may be chosen. In this regard, the power consumption of corresponding UEs may be subject to certain power consumption limits and restrictions which are, by way of example, summarized in the following table for a UE being implemented into a PCIe (Peripheral Component Interconnect Express) mini card.

|  | PCIe Mini Card | Notes |
|---|---|---|
| 3.3V Tolerance | ± 0.3V |  |
| 3.3V Average Current | 1100 mA | Averaged over any 1 second interval |
| 3.3V Maximum Current | 2750 mA | Averaged over 100 μSec for PCIe. |
| 1.5V Tolerance | ± 0.075V |  |
| 1.5V Average Current | 375 mA |  |
| 1.5V Max Current | 500 mA |  |
| Allowed total heat dissipation for class 1 devices | 2.3 W | When all components are rated for a case temperature of 90C. |
| Allowed total heat dissipation for class 2 devices | 3.1 W |  |

For a deployment in a USB dongle/stick the 5V (Tolerance: ± 0.25V) Average and Maximum Current per USB port is 500 mA for a high power USB 2.0 device. There is no restriction concerning the allowed heat dissipation. I.e. in case a USB dongle has 1 USB port it can consume maximum 2.5 W, in case it has 2 USB ports it can consume up to 5W. The above listed values can be taken as limits for a mobile terminal when deployed in a single-mode device. In case of a deployment in a multi-mode device the power consumption of other devices has to be taken in account, which leads to a further reduction of the maximum allowed limits.

In this regard, the US 6,760,311 discloses a mobile terminal, wherein certain operating parameters, such as the transmission data rate, are controlled such that a certain temperature threshold is not exceeded. The US 6,064,857 discloses a satellite telephone with hybrid battery and capacitor power supply comprising a switching circuit coupled to said battery and said capacitor for selectively coupling one of (a) the battery alone, (b) the capacitor alone, and (c) both together in parallel to the transmitter, depending on the data rate.

EP 1755236 A1 relates to selecting within a mobile station a transport formation combination which represents a combination of transport formats to be set in transport channels of uplink physical channels, such that a total transmission power will not exceed a maximum power of a mobile station when transmitting data simultaneously in the uplink physical channels.

Document WO 2010/127725 A1, published after the filing date of the present application, discloses another example of the prior art.

SUMMARY

It is the object of the present invention to provide an efficient concept for controlling an uplink data transmission of a communication device.

This object is achieved by the independent claims. Advantageous embodiments are described in the dependent claims, the description and the drawings.

The invention is based on the perception that an (uplink) data transmission of a communication device may efficiently be controlled if a decision whether to transmit or whether not to transmit (payload and/or control) data in an upcoming uplink interval is made early, e.g. as early as possible, e.g. upon receiving a scheduling grant from a network control node such as the eNodeB according to the 3GPP LTE specifications. Such scheduling grant might comprise an allowance to use certain transmission resources within the uplink interval, e.g. transmitting data over certain physical channels (i.e. channels related to the so-called physical layer like the uplink control channel (PUCCH) and the physical shared channel (PUSCH) according to the above mentioned 3GPP specifications).

With regards to current 3GPP LTE specifications, an LTE frame (having a duration of 10ms) comprises a certain number (currently 10) of LTE subframes, wherein one subframe corresponds to a so-called TTI (Transmission Time Interval), thus having a duration of 1 ms according to present specifications. In coherence thereto and without any intention to limit the invention, the uplink time intervals will be referred to as uplink frames or uplink subframes in the following. The communication device may be a wireless terminal (user equipment) or modem or PC card.

By way of example, assuming a timing advance (TA) between uplink subframes and downlink subframes being equal to zero, the certain uplink subframe is denoted by the ordering index n+3. Thus, a decision may be made already in downlink subframe n-1 in which a scheduling grant is received by the communication device whether to transmit or suppress the certain uplink transmission subframe n+3.

According to an aspect, the invention relates to controlling an uplink data transmission of a communication device over a communication network comprising receiving a scheduling grant for an uplink data transmission in a certain uplink subframe by the communication device, estimating an available energy for transmission by the communication device, e.g. for transmitting data in the certain uplink frame, and determining upon the basis of the available energy whether to reduce an uplink transmission data rate in the certain uplink frame. Reducing the transmission data rate may comprise partly or completely suppressing a data transmission, the data comprising e.g. payload and/or control information. Reducing the data transmission might further comprise reducing a (scheduled or granted) transmission data rate, The uplink data (rate) may be reduced by suppressing one or a plurality of physical data channels, e.g. the so-called physical uplink control channel (PUCCH), the physical shared channel (PUSCH) and/or sounding reference symbol transmission. In other words, reducing the uplink data (rate) might be understood as to using less (uplink) transmission resources (or not using any resources at all) than being allowed or granted by the scheduling grant received from the network.

By way of example, the communication device may be arranged to communicate over the communication network according to the 3GPP LTE standard. Thus, the scheduling grant may be transmitted towards the communication device by a network control entity such as eNodeB in an n-th downlink frame. In this regard, the term "uplink subframe" denotes a transmission subframe which is transmitted from the communication device towards the eNodeB. Conversely, the term "downlink subframe" refers to a transmission subframe which is transmitted from the eNodeB towards the communication device. In general, the term "uplink" refers to a transmission direction e.g. towards the eNodeB wherein the term "downlink" refers to a transmission direction towards the communication device. In the following, for the sake of brevity, a timing advance between uplink subframes and downlink subframes is assumed as being equal to zero. Thus, the uplink subframes and the downlink subframes may be denoted using the same numbering indices.

According to an embodiment, the step of estimating the available energy comprises averaging over an energy consumption of the communication device during a plurality of uplink subframes, the plurality of uplink subframes comprising the certain uplink subframe and at least one previous uplink subframe which precedes the certain uplink frame. The average energy consumption is an energy measure allowing estimating the available energy for transmitting data if e.g. the stored energy amount in an energy buffer, e.g. in an electrical capacitor, powering the communication device, is known. The energy consumption of the communication device during the plurality of uplink subframes may comprise an energy consumption related with data transmission, an energy consumption related with processing data for transmission etc. According to an embodiment, also an energy consumption which is independent from downlink (DL) and/or uplink (UL) processing may be considered.

According to an embodiment, the step of estimating the available energy comprises averaging over an energy consumption of the communication device during a plurality of downlink subframes. In this case, the energy consumption may include energy which is required for receiving the downlink subframes, for processing the downlink subframes etc. The energy consumption may relate to a downlink or uplink processing or may occur during a plurality of uplink subframes, the plurality of uplink subframes comprising the certain uplink subframe and at least one previous uplink subframe which precedes the certain uplink frame. The term "uplink processing" may relate to signal processing which is performed during the uplink frame and/or in connection with transmitting data in that uplink frame. However, the term "uplink processing" may also relate to processing data which are relevant during the uplink frame timely before that uplink frame. Correspondingly, the term "downlink processing" may relate to signal processing which is performed during the downlink frame and/or in connection with receiving data in that downlink frame. However, the term "downlink processing" may also relate to processing data which are relevant during the downlink frame timely before or after that downlink frame.

According to an embodiment, the step of estimating the available energy comprises determining an actual energy consumption of the communication device after a transmitted uplink subframe which precedes the certain uplink frame, and utilizing the actual energy consumption for estimating the available energy for the certain uplink frame. The actual energy consumption may be measured and/or calculated and may be used for e.g. correcting the estimate of the available energy for the certain uplink frame. However, the actual energy consumption may be used as a deterministic parameter in the estimation scheme for determining the available energy in the certain uplink frame. Such deterministic parameter may e.g. be additively combined with energy estimates used in an estimation function yielding the estimate of the available energy.

According to an embodiment, the step of estimating the available energy comprises determining an actual energy consumption after a transmitted downlink subframe which precedes the certain uplink subframe of the communication device, and utilizing the actual energy consumption for estimating the available energy. In this case, the actual energy consumption may reflect the measured and/or calculated energy consumption which may be determined after the transmission of the aforementioned transmitted downlink frame. The actual energy consumption may be utilized for estimating the available energy as mentioned above.

According to an embodiment, the available energy is estimated upon the basis of an expected activity of the communication device during the certain, i.e. future, uplink frame. The expected activity may comprise at least one of: the data transmission according to the scheduling grant, transmission or reception of control data, e.g. overhead data, transmission of an acknowledgement or of a non-acknowledgment, transmission of a channel quality indicator, transmission of a sounding reference symbol which may be used for channel estimation, channel measurements, downlink data reception, data processing, e.g. downlink data processing, and basic power consumption of the communication device e.g. without data transmission or reception.

According to an embodiment, the step of estimating the available energy comprises estimating another available energy after another uplink subframe which is to precede the certain uplink frame, and estimating the available energy using the other energy consumption. In other words, the available energy for the certain uplink subframe may iteratively be estimated upon the basis of estimated available energies for future uplink subframes which precede the certain uplink frame.

According to an embodiment, the available energy is estimated upon the basis of a look-up table, the look-up table linking at least one of the following parameters with available energies: stored energy in an energy source, in particular in a capacitor, transmit power of the communication device, in particular a transmit power in a physical uplink control channel (PUCCH) and/or in a physical shared channel (PUSCH), and/or a number of resource blocks for a PUSCH transmission and/or a number of bits, in particular a number of CQI or HARQ bits of a PUCCH transmission, and/or a transmit power for transmitting a sounding reference symbol, or an uplink bandwidth, and/or a frequency band, and/or a downlink resource block number, and/or a measurement activity, and/or a consumed energy by the communication device, in particular in an active state or in an inactive state, in particular during the downlink activity.

In order to determine the stored energy in the energy source at the end of uplink subframe n, the following formula may be used:

4

$$Estorage(n) = \tfrac{1}{2} * C * (Vmeas2\,(n) - Vmin2),$$

where C denotes the capacitance of the used capacitor, Vmin denotes a minimum voltage which allows correct RF front end operation and Vmeas(n) denotes voltage measured on the capacitor at the end of uplink subframe n.

According to an embodiment, the available energy may iteratively be determined using at least one of the following formulas:

$$Econtrol(n-1) = (EWC,UL,current + EWC,DL - Eaverage) / (EWC,UL,current + EWC,DL - Emax,current) * Emax,storage,$$

$$Econtrol(n) = min(Ehigh,\ Eaverage,last + Econtrol(n-1) - Ereal,UL(n) - Eest,DL(n)),$$

$$Econtrol(n+1) = min(Ehigh,\ Eaverage,last + Econtrol(n) - Ereal,UL(n+1) - Eest,DL(n+1)),$$

$$Econtrol(n+2) = min(Ehigh,\ Eaverage,last + Econtrol(n+1) - Eest,UL(n+2) - Eest,DL(n+2)),$$

$$Eavailable(n+3)=Eaverage,last+Econtrol(n+2)$$

wherein n+3 is a numbering index of the certain uplink frame, n+2 is a numbering index indicating an uplink subframe preceding the certain uplink frame, wherein n+1 is a numbering index indicating a (n+1)th uplink subframe to precede the certain uplink frame, wherein n a numbering index indicating an uplink subframe to precede the (n+1)-th uplink frame, wherein n-1 is a numbering index indicating an uplink subframe to precede the n-th uplink frame, wherein

Ehigh denotes an upper energy limit, e.g. a maximum energy amount which may be provided by an energy source, Eaverage denotes an average energy which may be dissipated by the mobile platform or which may be provided by an energy source powering the communication device within one frame,
Eaverage,last denotes the previously determined Eaverage,
Ereal,UL denotes an actual energy consumption of the communication device for UL related processing for a respective uplink frame,
Eest,UL denotes an estimated energy consumption of the communication device for UL related processing for a respective uplink frame,
Eest,DL denotes an estimated energy consumption of the communication device for downlink related processing and for downlink or uplink independent processing for a respective downlink frame, and
Econtrol denotes an available energy for the respective uplink frame,
Eavailable denotes the available energy for data transmission and data reception in the certain uplink frame,
EWC,UL,current denotes a worst case energy consumption for UL processing,
EWC,DL denotes a worst case energy consumption for UL processing, and Emax,current denotes a maximum energy which may be drawn from an energy source.

According to an embodiment, the step of estimating the available energy comprises at least one of: determining an energy status of an energy source powering the communication device, determining a maximum energy amount which is storable by the energy source, determining an allowed average heat energy dissipation, determining a maximum current amplitude of a current through the energy source, determining a maximum power of the energy source, and determining an average power which is supplied by an energy source.

According to an embodiment, the step of estimating the available energy comprises periodically measuring an amount of energy which is stored in an energy source.

According to an embodiment, the uplink transmission rate is reduced in the certain uplink subframe if the available energy is equal to or smaller than an energy threshold. The reduction of the uplink transmission rate may comprise reducing the transmission rate by a predetermined rate amount for suppressing payload transmission in the certain uplink subframe or suppressing any transmission in the uplink frame.

According to an embodiment, only a transmission of certain data is allowed in the certain uplink subframe if the available energy is equal to or smaller than an energy threshold. The certain data other than payload may comprise at least one of: data scheduled for re-transmission, and control data, in particular an acknowledgment or a non-acknowledgement, an UL transmission which is the last one according to the current DTX scheme, e.g. to a DRX configuration in DL or UL SPS configuration. In case the expected DL activity for subframe n is inactive or off, an UL transmission in subframe n+3 may be allowed as it may expected that there will be no UL transmission in subframe n+4.

According to an embodiment, the step of estimating the available energy comprises comparing the estimated available energy and/or an expected energy stored in an energy source e.g. after the (n+3)th subframe, which may correspond to Econtrol(n+3), with an energy threshold or with a plurality of energy thresholds. According to an embodiment, the step of determining may comprises determining whether the available energy enables a physical shared channel (PUSCH) transmission.

According to another aspect, the invention relates to a communication device for communicating over a communication network. The communication device comprises a receiver for receiving a scheduling grant for an uplink data transmission in a certain uplink frame, and a processor for estimating an available energy for transmission by the communication device, e.g. for transmitting data by the communication device, in the certain uplink frame, and for determining upon the basis of the available energy whether to reduce an uplink transmission rate in the certain uplink frame or to suppress transmission, e.g to suppress PUSCH, PUCCH and/or SRS transmission.

Further features of the communication device, in particular further features of the receiver and of the processor are derivable from the steps of the method for controlling uplink data transmissions.

BRIEF DESCRIPTION OF THE DRAWINGS

Further embodiments of the invention will be described with respect to the following figures, in which:

Fig. 1 shows an exemplary diagram of a method for controlling an uplink data transmission;

Fig. 2 shows a exemplary block diagram of a communication network comprising a communication device and a network node;

Fig. 3 shows an exemplary time line for an uplink data transmission of the communication device;

Fig. 4 shows a diagram with a first exemplary function of an available energy over certain time frames;

Fig. 5 shows a diagram with a second exemplary function of an available energy over certain time frames;

Fig. 6 shows a diagram with a third exemplary function of an available energy over certain time frames;

Fig. 7 shows a detailed exemplary flow diagram for controlling uplink data transmissions; and

Fig. 8 shows a further flow exemplary diagram with further details of controlling the uplink data transmission.

DETAILED DESCRIPTION OF EMBODIMENTS

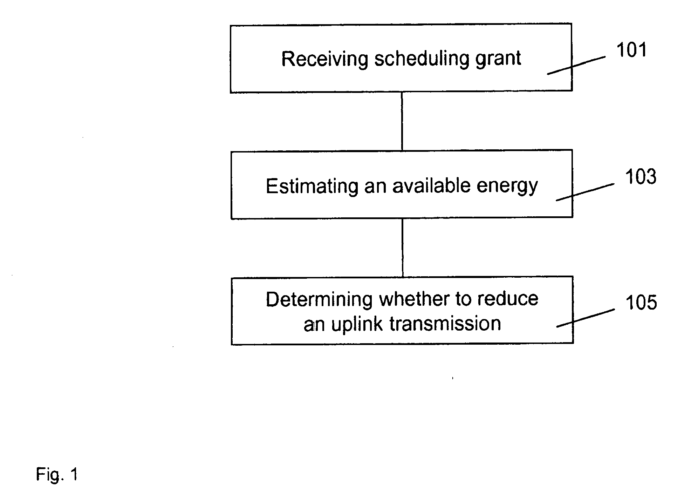

Fig. 1 shows an embodiment of a diagram of a method for controlling uplink data transmissions of a communication device over a communication network. The method comprises receiving 101 a scheduling grant for an uplink data transmission in a certain uplink subframe by the communication device, estimating 103 an available energy for transmitting data by the communication device in the certain uplink frame, and determining 104 upon the basis of the available energy whether to reduce an uplink transmission rate in the certain uplink frame. The scheduling grant may be transmitted by the network control entity such as eNodeB. The scheduling grant may indicate that the communication device may transmit data in the certain uplink subframe and how much UL resources it may use in this uplink frame.

However, prior to transmitting the data in the certain uplink frame, the decision is made as to whether to transmit the data with the full available transmission data rate or as to whether to reduce the transmission data rate or even as to whether to suppress payload transmission, control transmission or any transmission in the certain uplink frame.

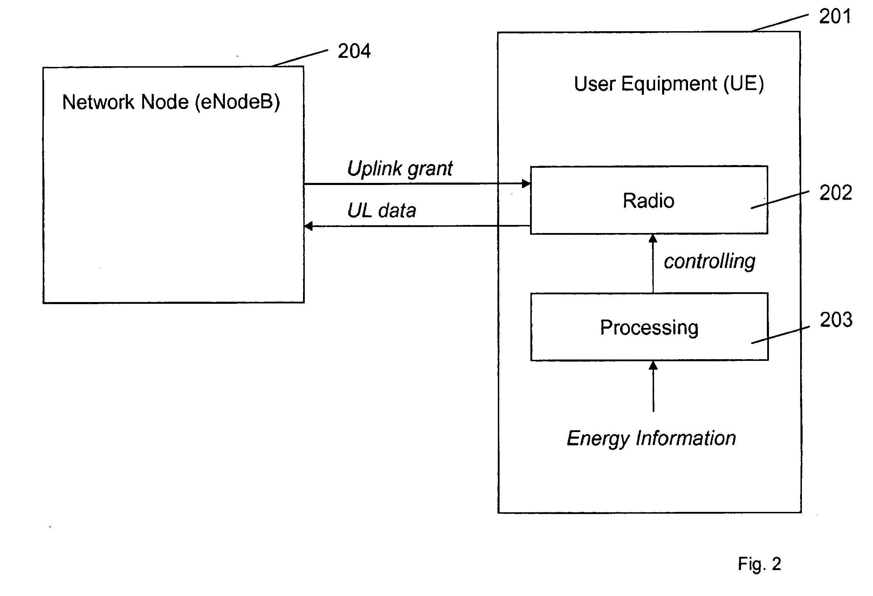

Fig. 2 shows an embodiment of a block diagram of a communication network comprising a communication device 201 and a network device 204. The communication device 201 is adapted for performing the method as shown in Fig. 1 comprising a receiver/transmitter 202 for receiving a scheduling grant from the network device 204 to send uplink data to the network device in a certain uplink frame and for a corresponding uplink data transmission, and a processor 203 for estimating an available energy for transmitting the data in the certain uplink frame to decide upon the basis of the available energy whether to reduce (or suppress) the uplink date transmission in the certain uplink frame.

The communication device 201 may form an embodiment of a user equipment - UE- according to the 3GPP LTE standard. Thus, the communication device may be arranged for wirelessly communicating over a communication network. Thus, the receiver may comprise an antenna, a reception filter etc. However, the receiver may be arranged for IP communications. Further, the communication device may be a USB (Universal Serial Bus) dongle, a PDA (Personal Digital Assistant), or a wireless modem (Modulator-Demodulator), a data card, phone, or a smart phone. The network device 201 might be a corresponding radio base station also being referred to as eNodeB within the frame of 3GPandards.

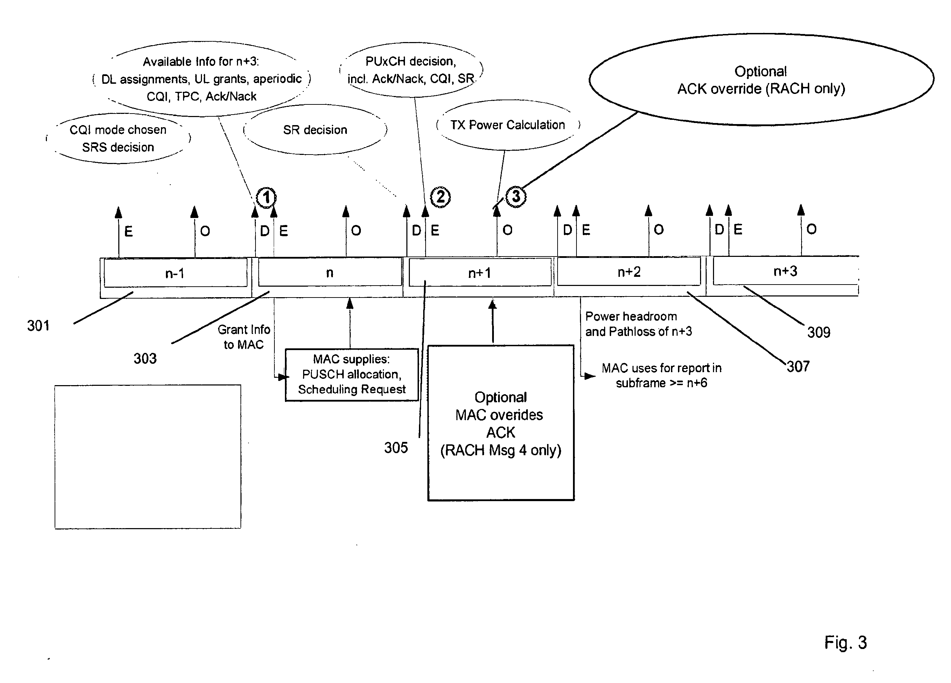

Fig. 3 shows an uplink time line for uplink transmission in the LTE physical layer according to an embodiment. The uplink time line shown in Fig. 3 shows the downlink time line and the uplink time line assuming a configuration with a timing advance (TA) between the downlink subframes and the uplink subframes as being equal to zero. Thus, the same ordering indices for downlink subframes and for uplink subframes may are used. However, the uplink transmission may depend on the actual timing advance. Thus, in the case where the timing advance is greater than zero, then the uplink transmission may start earlier than the uplink transmission depicted in Fig. 3 in correspondence to the actual timing advance value.

Fig. 3 depicts a (n-1)th downlink subframe 301, a n-th downlink subframe 303, a (n+1)th downlink subframe 305, a (n+2)th downlink subframe 307 and a (n+3)th downlink subframe 309. In the downlink subframe 301, a scheduling grant and a reception acknowledgement (ACK) or non-acknowledgment (NACK)may be received by the communication device with respect to a (n+3)th uplink frame forming an embodiment of the certain uplink frame. According to an embodiment, the ACK/NACK information is related to an UL subframe before the (n+3)th subframe and may have impact on the (n+3)th uplink frame. By way of example, the downlink subframes may comprise even slot events, E, and odd slot events, O. In addition, the downlink subframes may comprise decoders ready events, D. By way of example, at the odd slot event in the downlink subframe 301, a CQI mode may be chosen and a decision may be made as to whether to transmit a sounding reference symbol in uplink subframe n+3. At the decoders ready event of the following subframe 301, a SR (Scheduling Request) decision may be made. By way of example, at the decoders ready event in the subframe 303, available information for the certain uplink subframe 309 comprising downlink assignments, uplink grants, aperiodic CQI, TPC and acknowledgments or non-acknowledgments may be collected. Furthermore, grant information may be provided to the medium access control (MAC) layer. In response thereto, the MAC layer may provide information relating to the PUSCH allocation or whether to transmit a scheduling request. According to an embodiment, at the even slot event in the subframe 303, a decision may be made as to whether to suppress the transmission in the certain uplink subframe with the index n+3. In subframe 307, the power headroom and pathloss for uplink subframe n+3 is determined which the MAC may use for reporting in a subframe having an ordering index which is e.g. greater than n+5 or n+6.

According to a first implementation (1), the even slot event of subframe n, before sending the grant to MAC, may be considered. The actions to take for a complete suppression of an UL transmission in subframe n+3 at the even slot event of subframe n, before sending the grant to MAC e.g. may comprise at least one of the following actions: discarding any uplink grant for a new transmission, i.e. not sending the uplink grant to the MAC layer, discarding any uplink grant for a retransmission, i.e. not sending the uplink grant to MAC, discarding any aperiodic CQI request, discarding any TPC command for PUSCH/SRS, replacing any NACK with ACK before sending to MAC, cancelling any periodic CQI transmission, cancelling any SRS transmission.

In addition to the above mentioned actions, the physical layer (PHY layer) may also reject any scheduling request (SR) from MAC in subframe n+1, i.e. treat that subframe as if there is no SR opportunity for using the existing mechanism. Thus, according to some implementations, a maximum reduction of processing may be achieved, which contributes to a power consumption and temperature reduction. This is due to the fact that the MAC layer does not prepare data so that an uplink baseband processing chain is not started.

By way of example, at a decoders ready event in subframe 305, a SR decision may be made. Thus, at the E event, a PUCCH decision or a PUSCH decision regarding a data allocation including e.g. an acknowledgement, an acknowledgement, CQI or SR may be made.

According to a second implementation (2), the even slot event of subframe n+1, after receiving UL request from MAC, may be considered. The actions to take for a complete suppression of an UL transmission in subframe n+3 at the even slot event of subframe n+1, after receiving UL request from MAC may comprise at least one of the following actions: discard uplink data (re)transmission requested by MAC, discard any scheduling request, i.e. treat as if there is no SR opportunity for using the existing mechanism, cancel any periodic or aperiodic CQI transmission, cancel any Sounding Reference Signal (SRS) transmission, discard any previously received TPC command for PUSCH/SRS which would be applied in subframe n+3. Thus, a transmit power information may be provided although the actual transmit power for subframe n+3 may not yet be calculated.

According to a third implementation (3), at the odd slot event in subframe 305, a transmit power calculation is be performed. The actions in this case for a suppression of an UL transmission in subframe n+3 may be correspond to the actions mentioned above, except for the transmit power calculation related activity. After calculation of the transmit power, if no transmission is performed, then, optionally the power calculation may be reverted to the value before the transmission which may reduce the effect of eNodeB ramping up the power due to the missing transmissions from a communication device. Thus, the transmit power information may be exactly determined so that an accurate decision criteria are available.

With regard to the aforementioned first, second and third implementation, there are 3 time points in the sequence of subframes where the decision may be made as to whether to suppress the uplink transmission in the certain uplink subframe n+3. For a complete suppression in all 3 options, the MAC layer may not attempt any (re)transmission in subframe n+3, and the PHY layer may not send aperiodic CQI and SRS nor apply a power adjustment for that frame. Also for all 3 options no ACK/NACK may be sent in UL for the downlink (DL) data received via PDSCH in subframe n-1. Nevertheless the received DL data may be handled in the PHY layer and in the MAC layer as if there were no suppression of the corresponding ACK/NACK in subframe n+3.

According to some implementations, an implementation of taking the TX decision for subframe n+2 at the even slot event of subframe n may be considered before sending the grant to MAC.

From the UL throughput throttling, i.e. transmission rate reduction, functionality point of view which is depicted as the third alternative in Fig. 3, all UL calculations in PHY layer may be performed and therefore the UL suppression decision whether to reduce the transmission data rate may be based on calculations using known parameters.

With reference to the first option or alternative shown in Fig. 3, a reduction of a power consumption may be achieved as the MAC layer and the PHY layer processing is not started unnecessarily. Furthermore, a reduced impact on the PHY layer and MAC layer implementation results as the PHY layer and the MAC layer processing is not started unnecessarily and in particular no roll back to original state has to be done for PHY layer in case the decision is to suppress UL transmission.

According to the 3GPP standard the possible reasons to perform an UL transmission in subframe n+3 are: a data transmission which is triggered by uplink grant for new data received on PDCCH in subframe n-1, a data retransmission which is triggered by uplink grant for retransmission received on PDCCH in subframe n-1, a data retransmission which is triggered by NACK received on PHICH in subframe n-1, ACK/NACK (DL HARQ) which is triggered by data received in downlink in subframe n-1, scheduling request which is requested by a MAC layer in subframe n when uplink data pending and no grant available. Although the MAC layer may request a SR, the PHY layer may decide about whether and in which subframe the SR is actually transmitted, aperiodic CQI request, requested by eNodeB in PDCCH (if configured) in subframe n-1, periodic CQI request, generated in PHY layer at regular intervals (if configured), SRS transmission, generated in the PHY layer at regular intervals (if configured).

Also a re-scheduling of all PHY layer calculations before the decision point according to the first alternative (1) to obtain an accurate decision base may not be considered in order to avoid impact on the existing PHY layer implementation. Therefore the UL suppression decision is based on estimations for some parameters which are corrected in the further processing by using the real calculated parameters.

Thus, the method may comprise the following steps which may relate to the aforementioned first implementation:

In subframe n-1: Reception of DL subframe n including UL info for subframe n+3. In addition PHY layer determines whether SRS and periodic CQI should be transmitted in subframe n+3.
In subframe n: The information of the last subframe n-1 is available in PHY layer. Based on this information the power consumption for UL processing in subframe n+3 is estimated. Also the power consumption for DL processing in subframe n+3 is estimated based on the expected DL activity in subframe n+3. Based on this information the UL suppression decision for subframe n+3 is taken.
In subframe n+2: the UL parameters for subframe n+3 may be calculated in the PHY layer and are available. Therefore, the estimated power consumption for UL processing in subframe n+3 is replaced by a calculated power consumption. This corrected UL power consumption value is taken into account for the first time for the UL suppression decision for subframe n+5.
In subframe n+4: the DL activity for subframe n+3 is known in PHY layer and is available. Therefore the estimated power consumption for DL processing in subframe n+3 is replaced by a calculated power consumption. This corrected DL power consumption value is taken into account for the first time for the UL suppression decision for subframe n+7.

According to an implementation, a step-wise decision regarding the uplink transmission suppression may be performed. By way of example, the decision is not an either/or decision to transmit or to suppress transmission but can have 4 different values:

- Transmit PUSCH. i.e. transmit data + ACK/NACK (if scheduled) + CQI (if scheduled) + SRS (if scheduled),

- Transmit PUCCH, i.e. transmit ACK/NACK and/or CQI + SR (if requested)+ SRS (if scheduled),

- Transmit SRS only, or

- Suppress transmission.

Thus, if there is a request to transmit data it is checked whether there is enough energy to transmit it on the PUSCH. If there is an ACK/NACK to transmit it is checked whether there is enough energy to transmit it on the PUSCH or PUCCH. If there is a CQI to transmit it is checked whether there is enough energy to transmit it on the PUSCH or PUCCH. If there is SRS to transmit it is checked whether there is enough energy to transmit it in combination with the PUSCH, in combination with the PUCCH or transmit SRS only.

In the following, further embodiments of the invention will be described using the following abbreviations:

| Name | Definition |
|---|---|
| $E_{sleep}$ | The communication device energy consumption per subframe during a sleep phase. As there is no UL transmission in the sleep phase it is equal to the heat energy dissipation during the sleep phase. |
| $E_{WC,DL}$ | The worst case communication device energy consumption for DL processing and DL/UL independent processing per subframe for the current device configuration (e.g. supported bandwidths of the communication device) |
| $E_{WC,UL, current}$ | The worst case communication device energy consumption for UL processing per subframe for the current communication device configuration (e.g. supported bandwidths and frequency bands of the device) |
| $E_{WC,UL, heat}$ | The worst case communication device heat energy dissipation for UL processing per subframe for the current device configuration (e.g. supported bandwidths and frequency bands of the device) |
| $offset_{storage,meas}$ | The offset (unit: subframes) within one period of executing $E_{storage}$ measurements. The maximum value is thus $period_{storage,meas}$ - 1 |
| $period_{storage,meas}$ | The periodicity (unit: subframes) of executing $E_{storage}$ measurements. A typical value would be 4. |
| $TTI_{max}$ | Maximum subframe number according to 3GPP; equals 10 * maximum SFN = 10240 |

Furthermore, the following parameters may be deployed:

| Name | Definition |
|---|---|
| band(x) | The used frequency band in subframe x |
| $d_{sleep}$ | Sleep duration in number of subframes |
| DL_act(x) | The real DL activity in subframe x; range:<br>■ PDSCH: in case a PDSCH was received<br>■ PDCCH: in case a PDCCH was received<br>■ inactive: in case the DL reception was monitored but no PDxCH was received<br>■ off: in case DL reception was not monitored |
| $DL\_aCt_{est}(X)$ | The estimated DL activity in subframe x; range:<br>■ PDSCH: in case the configuration (DRX, DL SPS) forecasts a PDxCH reception<br>■ inactive: in case the configuration (DRX, DL SPS) forecasts no PDxCH reception but a monitoring of DL<br>■ off: in case the configuration (DRX, DL SPS) forecasts no DL reception monitoring |

(continued)

| Name | Definition |
|---|---|
| DL_BW(x) | The used DL bandwidth in subframe x |
| $DL\_BW_{last}$ | The last used DL bandwidth for real reception |
| DL_RBs(x) | The number of DL resource blocks received in an active subframe x |
| $DL\_RBs_{last}$ | The number of the last received DL resource blocks for PDSCH |
| $E_{available}(X)$ | Energy which is available for data transmission according to an embodiment<br>■ If limit_type = 0 (peak current) or 1 (average current): the available energy (expressed in mWs) which can be consumed by the communication device within subframe x<br>■ If limit_type = 2 (heat): the possible heat energy (expressed in mWs) which can be dissipated by the communication device in average within subframe x |
| $E_{average}$ | Average consumption energy or average target consumption energy<br>■ If limit_type = 0 (peak current) or 1 (average current): the target energy (expressed in mWs) which can be consumed by the communication device from the current supply in average within one subframe (duration: 1 ms). $E_{average \le} E_{max,current}$ may be valid in case of limit_type = 0.<br>■ If limit_type = 2 (heat): the target heat energy (expressed in mWs) which can be dissipated by the communication device in average within one subframe (duration: 1 ms) |
| $E_{average,last}$ | Actual energy consumption after a past frame<br>The last received $E_{average}$ (expressed in mWs) which is used for the actual calculations. |
| $E_{buffer}$ | ■ If limit_type = 0 (peak current): the minimum energy (expressed in mWs) which should be kept in the energy source after normal UL transmissions.<br>■ If limit_type = 1 (average current): the minimum "virtual" energy (expressed in mWs) which should be kept in the communication device after normal UL transmissions.<br>■ If limit_type = 2 (heat): the minimum "virtual" cooling energy (expressed in mWs) which should be kept stored in the communication device after normal UL transmissions.<br>This minimum energy is kept as buffer for critical UL transmissions (e.g. data retransmissions, ACK/NACKs). |
| $E_{control}(X)$ | Energy which is available for data transmission according to an embodiment<br>■ If limit_type = 0 (peak current): energy control function representing the energy (expressed in mWs) stored in the energy source at the end of subframe x which can be maximally consumed by the communication device until the voltage drop at the energy source is too high to allow correct RF frontend operation.<br>■ If limit_type = 1 (average current): energy control function representing the energy (expressed in mWs) "virtually" stored in the communication device at the end of subframe x which can be maximally consumed by the communication device until the average current consumption gets above the limit.<br>■ If limit_type = 2 (heat): energy control function which representing the current "virtual" cooling energy (expressed in mWs) stored in the communication device after subframe x which can be consumed by the communication device until it is too hot to allow correct operation. |
| $E_{control,last}$ | The last $E_{control}$ value (expressed in mWs) before entering sleep mode. |
| $E_{est,\Delta}(x)$ | ■ If limit_type = 0 (peak current) or 1 (average current): the estimated delta between the available energy for subframe x and the communication device energy consumption within subframe x (expressed in mWs)<br>■ If limit_type = 2 (heat): the estimated delta between the possible heat energy which is allowed to be dissipated within subframe x and the communication device heat energy dissipation within subframe x (expressed in mWs) |
| $E_{est,DL}(X)$ | The estimated energy consumption for DL and DL/UL independent activity, e.g. processing, within subframe x (expressed in mWs) |

(continued)

| Name | Definition |
|---|---|
| $E_{est,UL}(X)$ | ■ If limit_type = 0 (peak current) or 1 (average current): the estimated energy consumption for UL processing within subframe x (expressed in mWs)<br>■ If limit_type = 2 (heat): the estimated heat energy dissipation for UL processing within subframe x (expressed in mWs) |
| $E_{high}$ | Upper limit for $E_{control}(X)$ (expressed in mWs) |
| $E_{low}$ | Threshold for $E_{control}(X)$ (expressed in mWs). If $E_{control}(X)$ ;:: $E_{low}$ then the UL transmission in subframe x can be executed. Else if $E_{control}(x) < E_{low}$ then only critical UL transmissions like retransmissions in subframe x are allowed to be executed. |
| $E_{max,current}$ | ■ If limit_type = 0 (peak current): the maximum energy (expressed in mWs) which can be drawn from the current supply<br>■ If limit_type = 1 (average current) or 2 (heat): not applicable |
| $E_{max,storage}$ | ■ If limit_type = 0 (peak current): the maximum energy (expressed in mWs) which can be discharged from the energy source until the voltage drop at the energy source is too high to allow correct RF frontend operation<br>■ If limit_type = 1 (average current): the maximum energy (expressed in mWs) "virtually storable" in the communication device which can be consumed by the communication device until the average current consumption gets above the limit.<br>■ If limit-type = 2 (heat): the maximum "virtual" cooling energy (expressed in mWs) storable in the communication device which can be consumed by the communication device until it is too hot to allow correct operation |
| $E_{real,DL}(X)$ | The real energy consumption for DL and DL/UL independent processing within subframe x (expressed in mWs) |
| $E_{real,UL}(X)$ | The real energy consumption for UL processing within subframe x (expressed in mWs) |
| $E_{storage}(X)$ | ■ limit_type = 0 (peak current): the energy (expressed in mWs) stored after subframe x in the energy source until the voltage drop at the energy source is too high to allow correct RF frontend operation. In case the voltage drop is too high, $E_{storage}(X)$ gets negative and then corresponds to the energy which has to be charged to the energy source until it reaches the voltage threshold which allows correct RF frontend operation.<br>■ If limit_type = 1 (average current) or 2 (heat): not applicable |
| energy_type | ■ The type of energy which is used in the calculations, the consumed energy or the disspated heat energy. range: 0 (consumed), 1 (heat) |
| limit_type | Defines whether the communication device is operated in a peak current limited host environment, in an average current limited host environment of in a heat dissipation limited host environment. In a peak current limited host environment always an energy source is attached to the communication device. range: 0 (peak current), 1 (average current), 2 (heat) |
| n | Frame number |
| $n_{CQI}(x)$ | Number of CQI bits transmitted in subframe x |
| $n_{CQI,last}$ | Number of CQI transmitted during last PUCCH transmission |
| $n_{HARQ}(x)$ | Number of HARQ bits transmitted in subframe x |
| $n_{HARQ,last}$ | Number of HARQ transmitted during last PUCCH transmission |
| $M_{PUSCH}(X)$ | Number of resource blocks for PUSCH transmission in subframe x according to 3GPP TS36.213 |
| $M_{PUSCH,last}$ | $M_{PUSCH}$ in last PUSCH transmission |
| $M_{PUSCH}(X)$ | Number of resource blocks for SRS transmission in subframe x according to 3GPP TS36.213. In case $M_{PUSCH}(X)$ is not (yet) available for subframe x, $M_{PUSCH}(X)$ is set to "not available". |
| $M_{SRS,last}$ | $M_{SRS}$ in last SRS transmission |

(continued)

| Name | Definition |
|---|---|
| meas_act(x) | The real measurement activity in DL in subframe x; range:<br>■ on: in case a DL measurement was done<br>■ off: in case a DL measurement was not done |
| meas_act$_{est}$(x) | The estimated measurement activity in DL in subframe x; range:<br>■ on: in case the measurement configuration forecasts a DL measurement<br>■ off: in case the measurement configuration forecasts no DL measurement |
| $P_{PUCCH}$(X) | The UE transmit power $P_{PUCCH}$ for PUCCH transmission in subframe x according to 3GPP TS36.213, in case there is no PUCCH to transmit the value is set to 'off' |
| $P_{PUCCH,last}$ | $P_{PUCCH}$ for last PUCCH transmission |
| $P_{PUSCH}$(X) | The UE transmit power $P_{PUSCH}$ for PUSCH transmission in subframe x according to 3GPP TS36.213, in case there is no PUSCH to transmit the value is set to 'off' |
| $P_{PUSCH,last}$ | $P_{PUSCH}$ for last PUSCH transmission |
| $P_{SRS}$(X) | The UE transmit power $P_{SRS}$ for SRS transmission in subframe x according to 3GPP TS36.213, in case SRS is not transmitted the value is set to 'off' |
| $P_{SRS,last}$ | $P_{SRS}$ for last SRS transmission |
| PUSCH_act(x) | The scheduled PUSCH activity for subframe x; range:<br>■ TX: in case of data transmission on PUSCH<br>■ RTX: in case of data retransmission on PUSCH<br>■ off: in case no data is transmitted on PUSCH |
| SRS_act(x) | The scheduled SRS activity for subframe x; range:<br>■ on: in case SRS is transmitted<br>■ off: in case SRS is not transmitted |
| TX_dec(x) | The TX decision of the UL TX Supervisor for subframe x; range:<br>■ PUSCH: PUSCH and SRS (if scheduled) is transmitted<br>■ PUCCH: PUCCH (if there are CQI bits, HARQ bits or a SR) and SRS (if scheduled) is transmitted. Note if there are no CQI bits, no HARQ bits, no SR and no SRS then TX is switched off.<br>■ SRS: only SRS is transmitted<br>■ off: no transmission |
| UL_BW(x) | The used UL bandwidth in subframe x |

It may be noted that EWC,DL, EWC,UL,current and EWC,UL,heat may be considered constant. However, EWC,DL, EWC,UL,current and EWC,UL,heat may be dependent on the used band and the DL and UL bandwidth.

It may further be noted that the term worst case in EWC,DL, EWC,UL,current and EWC,UL,heat may be related to the communication device parameters which influence the energy consumption, but not to the operation conditions of the single hardware components. Thus, these worst case communication device energy consumptions may be related to typical power consumption values of the single hardware components.

The energies EWC,DL, EWC,UL,current, EWC,UL,heat and Esleep may be derived from measurements of the real communication device energy consumption and may be configuration parameters e.g. stored in the file system.

Also periodstorage,meas and offsetstorage,meas may be configuration parameters e.g. stored in the file system. As the Estorage measurement may be performed done by e.g. the RF ASIC.

With reference to Fig. 3, according to some implementations, different energy thresholds may be employed. By way of example, for each subframe n in which the UL TX decision regarding the question whether to reduce the data transmission rate has to be taken, the expected available energy Eavailable(n+3) for the certain uplink subframe may be compared with the expected energy consumption in this subframe, Eprocessing(n+3). The available energy Eavailable(n+3) may represent the sum of the average energy Eaverage which can be consumed in each subframe by the communication device and the energy which is stored in the device after the last TTI which is represented by the energy control function at the last TTI Econtrol(n+2).

By way of example, two thresholds may be deployed in order to decide whether there will be an UL transmission in subframe n+3:

> In case Econtrol(n+3) ≥ Elow: Each UL transmission in subframe n+3 may be allowed.
> In case 0 ≤ Econtrol(n+3) < Elow: UL transmissions in subframe n+3 are only allowed if they fulfill certain conditions.
> In case an SRS transmission is also scheduled for such a subframe and the certain conditions are fulfilled also SRS is transmitted in this frame.

The certain conditions to enable UL transmission in case 0 ≤ Econtrol(n+3) < Elow may be ones of the following conditions :

- the UL transmission contains a data retransmission,

- the UL transmission contains ACK/NACKs triggered by data received in DL,

- the UL transmission is an UL transmission which is the last one according to the current DTX scheme, e.g. to a DRX configuration in DL or UL Semi-Persistent Scheduling (SPS) configuration. In case the expected DL activity for subframe n is inactive or off an UL transmission in subframe n+3 may be allowed as it is expected that there will be no UL transmission in subframe n+4.

In case Econtrol(n+3) < 0: No UL transmission in subframe n+3 is allowed.

Normally Econtrol(x) may be ≥0. The case that it is below 0 can only happen when the energy consumption estimations which were the base for the decisions whether to transmit or suppress earlier UL subframes were too optimistic compared to the real energy consumption.

For normal UL transmissions the control of the UL transmission in subframe n+3 may be performed in a way that the available energy in subframe n+4 is enough to allow a critical UL transmission in subframe n+4. Therefore Elow may have a value which allows a worst case energy consumption in TTI n+4 for critical events like data retransmissions and ACK/NACK transmissions. In case the UL transmission for subframe n+3 is assumed to be the last transmission for a while because of the current DRX configuration no energy is saved for the next frame. The preferred treatment of data retransmissions in UL avoids as far as possible the suppression of more than one transmission belonging to the same UL HARQ process. Also the preferred treatment of ACK/NACKs for DL HARQ avoids as far as possible the loss of DL data.

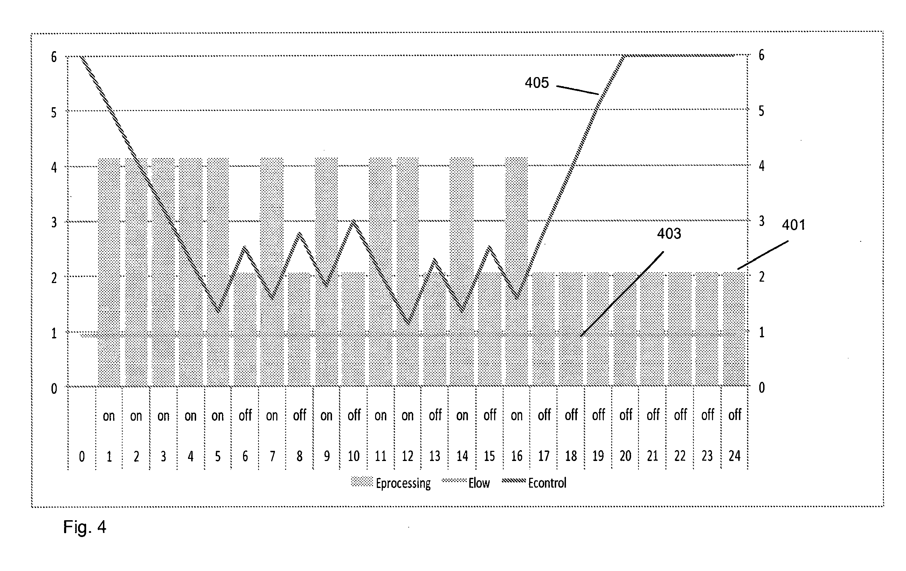

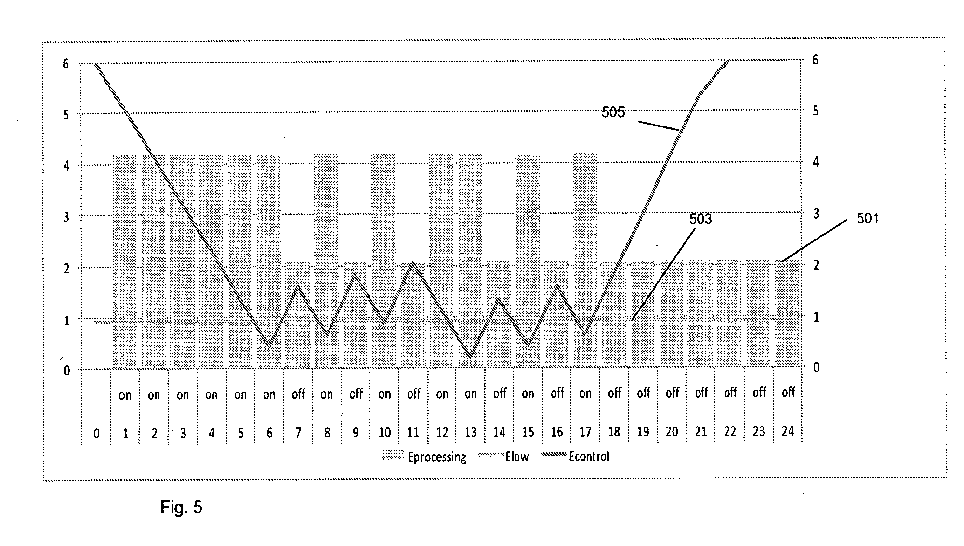

Figs. 4 and 5 demonstrate the above described control behavior for normal data transmissions in transmission time intervals 1-18, Fig. 4, and for data retransmissions in transmission time intervals 1-18, Fig. 5. In particular, Figs. 4 and 5 show Eprocessing curves 401, 501, Elow curves 403, 403 and Econtrol curves 405, 505.

According to some implementations, a unified control of current consumption limitation, heat dissipation limitation and overheating protection may be performed.

Dependent on the deployment of the communication device it works either in a current consumption limited host environment or in a heat dissipation limited host environment. If the host environment is current consumption and heat dissipation limited it has to be configured which of the limit is more critical as only one limitation type is controlled at one time.

A deployment as a USB dongle is normally current limited as the available peak and average current from the USB power supply is below the maximum current consumption of the communication device. In contrast a deployment as a PCIe mini card is considered heat dissipation limited as the heat dissipation limit in the PCIe mini card standard is more critical than the current consumption limit. However, the same control mechanism is applied to both cases. The difference is that the target energy Eaverage in the control algorithm means in one case the average energy which can be drawn from the power supply within one subframe and in the other case the average heat energy which can be dissipated within one frame. Therefore also in one case the complete energy consumed by the communication device is monitored whereas in the other case the heat dissipated by the communication device is monitored in order to decide about UL transmission or suppression.

In addition the temperatures inside the communication device, i.e. inside the communication device, may be monitored. In case the measured temperatures are in a range which indicate an actual or a potential over-temperature situation the heat dissipation of the communication device has to be limited to get into the normal temperature range again. In case of a heat dissipation limited configuration like for a deployment as a PCIe mini card or a smart phone this can simply be done by correspondingly decreasing the target average heat energy dissipation limit Eaverage of the communication device and increasing it again in case the over-temperature situation is over.

According to some implementations, also in a current limited configuration over-temperature situations can occur. In order to avoid the monitoring of a second curve, the target total energy consumption limit Eaverage of the communication device may be adapted to get out of the over-temperature situation again because the error (maximum 200mW) when monitoring the total energy consumption instead of the heat dissipation is acceptable.

In order to be able to still consider the energy stored in the communication device the maximum limit Ehigh, which represents the maximum energy which can be stored in the communication device, the threshold Elow and the current value of Econtrol may be multiplied by a correction factor. This correction factor corresponds to the ratio of the delta between the worst case communication device energy consumption (EWC,communication device) and Eaverage and the delta between the worst case communication device energy consumption and the maximum average energy which can be drawn from the current supply (Emax,current). Thus, the ratio may be expressed using the following formula:

$$
\text{(EWC,communication device - Eaverage) / (EWC,communication device - Emax,current)}
$$

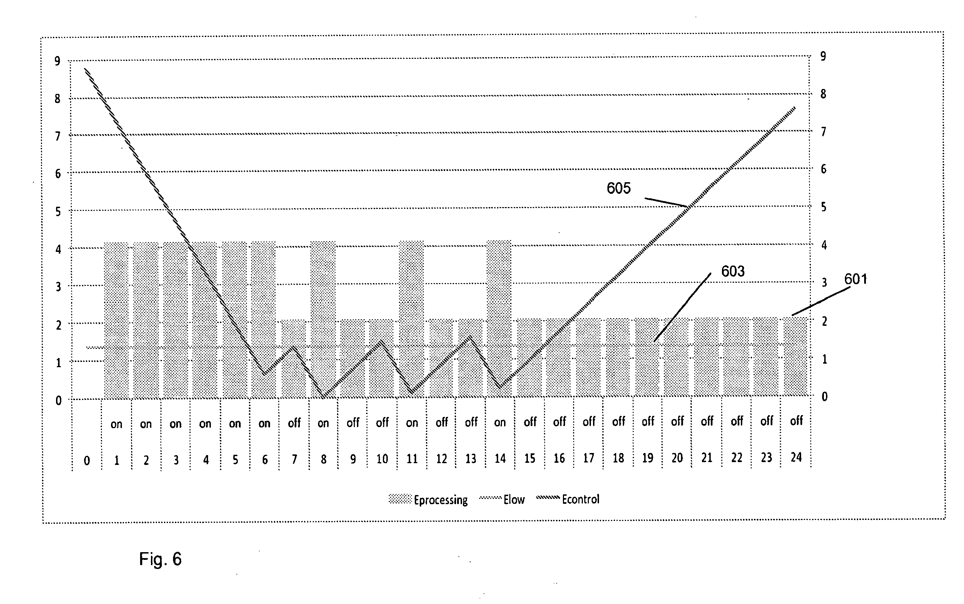

Fig 6. shows energy distributions for data transmissions. In particular, the control behavior for the case of a current limited configuration with the same parameters as used in Fig.5 but with a lower Eaverage of 2.81mWs than the maximum average energy which can be drawn from the current supply (3.23mWs) is illustrated for data retransmissions in TTIs 1-18 in Fig. 6. Compared to Fig. 4 it can be seen that the throttling rate, i.e. the transmission data reduction rate, increases from 43% to 67%. Nevertheless, it is possible to transmit 4 TTIs in case of a DRX/DTX configuration.

According to some implementations, the energy stored in the communication device, e.g. the energy stored in a capacitor, may be determined.

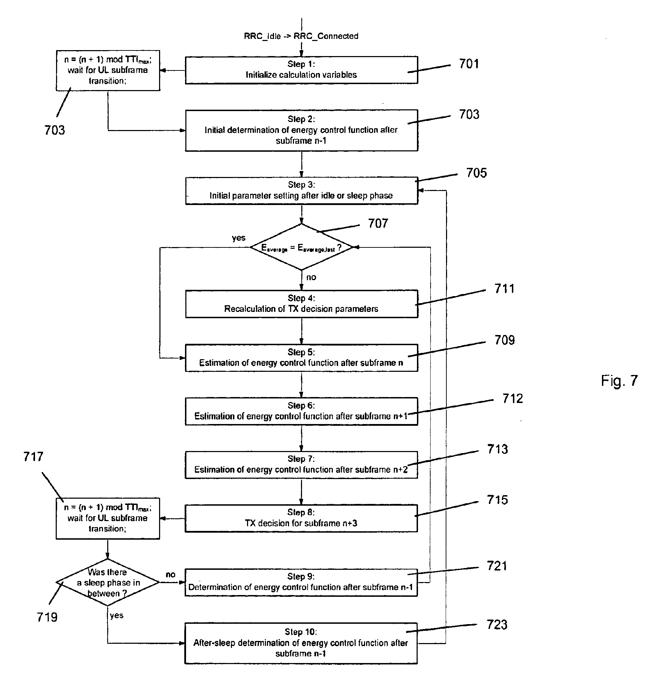

In order to determine the stored energy for peak current limited host environments, for host environments which can only provide peak currents which are lower than the worst case current consumption of the communication device, an energy source is needed in the communication device to be able to handle the peak energy consumption situations. In case of a deployment as a USB device a capacitor has therefore be attached to the communication device. The energy stored after subframe n in the capacitor until the voltage drop is too high to allow correct operation corresponds to the value of the control function Econtrol(n) in case all calculation parameters are ideally shaping the communication device energy consumption. As this is not the case in real systems the calculation parameters may be chosen such that they are rather pessimistic than optimistic. This secures that the real energy stored in the energy source is always a bit higher or equal than the energy represented by Econtrol(n) and that the real voltage drop at the capacitor is not higher than calculated and therefore the correct operation of the communication device. In case of longer phases with an energy consumption of the communication device lower than the energy which can be delivered by the current supply both the energy stored in the energy source and the energy represented by Econtrol(n) reach their saturation level and thus match each other again. Therefore, the maximum energy Emax,storage which can be stored in the energy source until the allowed voltage drop may correspond to the real value. Emax,storage is a configuration value. At the start of a RRC_ Connected state shown in Fig. 7 and thus at the start of the UL throughput throttling it is assumed that the energy source is fully loaded as in the time before in the RRC_Idle state the energy consumption of the communication device is lower than the energy which can be delivered by the current supply.

Nevertheless, the energy stored in the capacitor may be measured periodically in order to correct the calculated value by the real value. In particular this may be considered in case the real energy consumption does not correspond to the calculated energy consumption due to reasons which cannot be considered in the calculations like e.g. antenna mismatches or temperature variations caused by environmental conditions.

In case the target average energy consumption per subframe is equal to the peak energy supply limit per subframe of the current supply the measured value may replace the calculated value periodically.

In case the target average energy consumption per subframe is lower than the peak energy supply limit per subframe of the current supply the measured value may only replace the calculated value in case it is lower.

In order to determine stored energy for average current or heat dissipation limited host environments, for host environments which can provide peak currents which are higher than the worst case current consumption of the communication device, a (physical) energy source is not needed. Nevertheless, also Emax,storage is used in these configurations to represent a maximum value for Econtrol(n). It is used in the controlling algorithm to allow several consecutive subframe UL transmissions also in bad link situations which is particularly important to handle DRX/DTX use cases. In case of a heat limited configuration Emax,storage can e.g. be seen as the maximum "virtual" cooling energy (expressed in mWs) storable in the communication device which can be consumed by the communication device until it is too hot to allow correct operation. As for the capacitor case at the start of a RRC_Connected state as shown in Fig. 7 and thus at the start of the UL throughput throttling it is assumed that the virtual energy source is fully loaded as in the time before in the RRC_Idle state the heat dissipation of the communication device is lower than the allowed heat dissipation.

According to some implementations, the communication device may comprise an uplink transmission Supervisor (UL TX Supervisor) which may be configured to perform the method for controlling uplink data transmissions of a communication device. The UL TX Supervisor may be implemented in software, wherein the software functionality UL TX Supervisor may be a part of the PHY layer software and may execute the following functions:

- Communication device energy consumption and heat dissipation tracking,

- Communication device energy consumption and heat dissipation forecast estimation,

- Tracking of fulfillment of given limits: peak power consumption limit, average power consumption limit, average heat dissipation limit, decision about UL transmission.

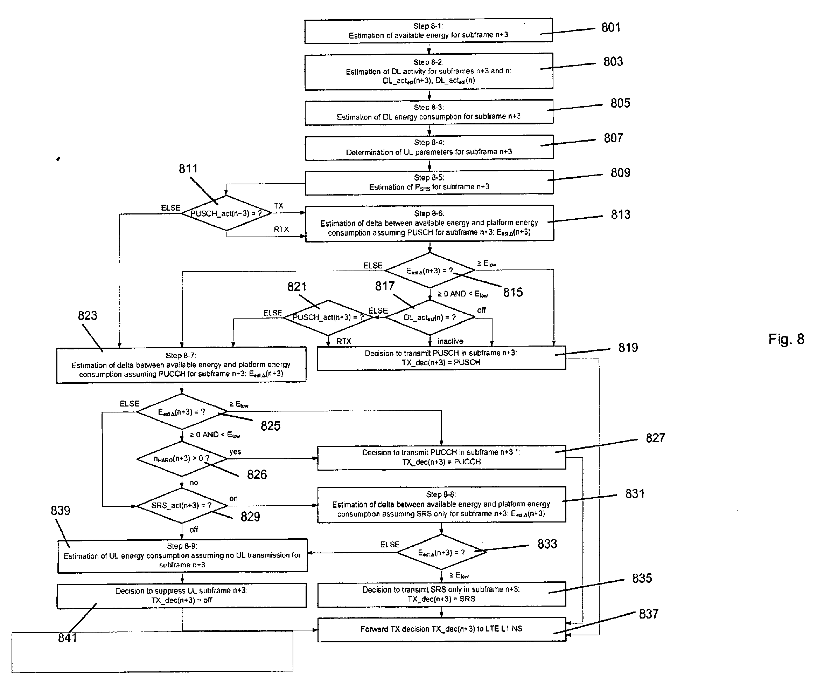

According to an implementation, the UL TX Supervisor may be configured to perform at least one of the methods as shown in Figs. 7 or 8. The UL TX Supervisor may be enabled by the PHY layer software when the RRC state changes from RRC_Idle to RRC_Connected and is disabled by the PHY layer software when it changes from RRC_Connected to RRC_Idle.

The UL TX Supervisor may have following interfaces:

To and/or from PHY layer software:

- Usage of UL subframe transition event from PHY layer software which corresponds to the Even Slot Event,

- Fetch and subscribe for updates of UL and DL parameters which are relevant for the UL TX decision from PHY layer software,

- Forward UL TX decision to PHY layer software,

- Fetch and subscribe for updates of environmental related parameters.

Fig. 7 shows a diagram of a Method for controlling uplink data transmissions of a communication device according to an embodiment.

In step 701, optionally, calculation variables may be initialized. Thereafter, in step 703, a calculation n = (n+1) mod TTImax is performed, wherein the method waits for the next uplink subframe or subframe transition. Thereafter, in step 703, an optional initial determination of energy control function after a subframe n-1 may be performed. Thereafter, in step 705, an initial parameter setting after an idle phase or a sleep phase may be performed. Thereafter, in step 707, Eaverage is compared to Eaverage, last. If both energies are equal, then, in step 709, the energy control function after subframe n is estimated. Otherwise, in step 711, the transmit (TX) decision parameters are recalculated and the method proceeds with the step 701. After the step 709, in step 712, the energy control function after subframe n+1 may be estimated. Thereafter, in step 713, the energy control function after subframe n+2 may be estimated. Thereafter, in step 715, a transmit decision for subframe n+3, i.e. for the certain uplink frame, is performed. Thereafter, the method proceeds with the step 717 which corresponds to the step 703. Thereafter, in step 719, the method determines as to whether a sleep phase was present in between. If there was no sleep in between, then the method proceeds with step 721 in which the energy control function is determined after subframe n-1. Otherwise, the method proceeds with step 723 in which an after-sleep determination of the energy control function after subframe n-1 is performed. After the steps 721 or 723, the method proceeds with step 705.

According to an embodiment, the energy control function represents the available energy for transmitting data by the communication device according to some implementations.

In the following, further embodiments will be described with reference to the parameters and functions specified below:

The function fE,DL(DL_act, DL_RBs, DL_BW, meas_act) determines an energy consumption for DL processing and DL/UL independent processing per subframe dependent on

- DL_act: the DL activity in the subframe (PDSCH, PDCCH, inactive, off),

- DL_RBs: the number of DL resource blocks received in an active frame,

- DL_BW: the used DL bandwidth, or

- meas_act: the DL measurement activity in the subframe (on, off).

The function fE,UL(PPUSCH, PPUCCH, PSRS, MPUSCH, UL_BW, band, type) determines energy consumption or heat energy dissipation for UL processing per subframe dependent on

- PPUSCH: the UE transmit power PPUSCH for PUSCH transmission according to 3GPP TS36.213, in case there is no PUSCH to transmit the value is set to 'off',

- PPUCCH: the UE transmit power PPUCCH for PUCCH transmission according to 3GPP TS36.213, in case there is no PUCCH to transmit the value is set to 'off',

- PSRS: the UE transmit power PSRS for SRS transmission according to 3GPP TS36.213, in case SRS is not transmitted the value is set to 'off',

- MPUSCH: number of resource blocks for PUSCH transmission according to 3GPP TS36.213,

- UL_BW: the used UL bandwidth,

- band: the used frequency band,

- energy_type: 0 (consumed) or 1 (heat): in case energy_type = 0 fE,U provides the energy consumption for UL processing per subframe and in case energy_type = 1 fE,UL provides the heat energy dissipation for UL processing per frame.

The functions may be implemented upon the basis of at least one look-up table.

The results of both functions, fE,DL and fE,UL may be based on real energy consumption measurements of the communication device. The best implementation of these functions is probably by using arithmetic computations in combination with several Look-Up Tables for dependencies which cannot easily be represented by arithmetic computations. Single look-up table entries may be derived from power consumption measurements of the communication device The look-up tables for fE,DL and fE,UL may be configurable and may e.g. be stored in the file system. For the implementation of fE,DL and fE,UL a good compromise has to be found between the sizes of the used look-up tables, the computational effort and the accuracy of the communication device energy consumption representation. As it will not be possible to ideally shape the communication device energy consumption with fE,DL and fE,UL, the used calculation parameters and look-up table entries may be chosen such that they are rather a bit more pessimistic than optimistic.
With reference to step 701 of Fig. 7, for initializing the calculation variables, the following parameters may be fetched, e.g. by the UL TX Supervisor functionality from the PHY layer software functionality:

n: current UL subframe number,
DL_BW(n): used DL bandwidth in subframe n.

The UL TX Supervisor functionality may fetch the following environmental dependent parameters from the Environmental Condition Detection functionality:

- limit_type
- Emax,current
- Emax,storage
- $E_{buffer}$
- Eaverage

The parameter limit-type, Emax,current, Emax,storage and Ebuffer may considered as static during runtime. However, Eaverage may change during runtime. Therefore the UL TX Supervisor functionality subscribes for updates of Eaverage from the Environmental Condition Detection functionality. Received updates may be applied at the next calculation cycle.
If limit_type = 0 (peak current) then the UL TX Supervisor functionality may configure the Environmental Condition Detection functionality to execute Estorage measurements with a periodicity of periodstorage,meas subframes and an offset of offsetstorage,meas subframes. The measurement of Estorage(n-2) is available at the start of subframe n and can from this time point on be fetched by the UL TX Supervisor functionality.
According to an implementation, the following assignments may be performed:

DL_BWlast = DL_BW(n)
IF (limit_type = 0 (peak current) OR limit_type = 1 (average current)) THEN
energy_type = 0
ELSE
energy_type = 1
ENDIF
Initial values are assigned for $DL\_RBS_{last}$, $P_{SRS,last}$, $M_{SRS,last}$, $P_{PUSCH,last}$, $M_{PUSCH,last}$, $P_{PUCCH,last}$, $n_{CQI,last}$, $n_{HARQ,last}$

With reference to step 703 of Fig. 7, the initial determination of energy control function after subframe n-1 may be performed as follows:

If limit_type = 0 (peak current) THEN
Econtrol(n-1) = (EWC,UL,current + EWC,DL - Eaverage) / (EWC,UL,current + EWC,DL - Emax,current) * Emax,storage;
Elow = (EWC,UL,current + EWC,DL - Eaverage) / (EWC,UL,current + EWC,DL - Emax,current) * max(Ebuffer, EWC,UL,current + EWC,DL - Emax,current)
Ehigh = (EWC,UL,current + EWC,DL - Eaverage) (EWC,UL,current + EWC,DL - Emax,current) * Emax,storage;
ELSE
Econtrol(n-1 ) = Emax,storage;
Elow = max(Ebuffer, EWC,UL,heat + EWC,DL - Eaverage);
Ehigh = Emax,storage;
ENDIF
Eaverage,last = Eaverage;

According to an implementation, an initial parameter setting after idle or sleep phase may be performed in step 705.

According to an implementation, the step 705 may comprise a calculation of energy consumption for UL processing in subframe n comprising at least one of the following steps:

Get the following parameters from PHY layer software for subframe n:

- $P_{PUSCH}(n)$
- $P_{PUCCH}(n)$
- $P_{SRS}(N)$
- $M_{PUSCH}(N)$
- UL_BW(n)
- band(n)

Calculate energy consumption for UL processing in subframe n:

Ereal,UL(n) = fE,UL(PPUSCH(n), PPUCCH(n), PSRS(n), MPUSCH(n), UL_BW(n), band(n), energy_type)

According to an implementation, the step 705 may comprise a determination of the TX decision, i.e. the decision whether to reduce a transmission data rate, for subframe n+1 with at least one of the following steps:

Get the following parameters from PHY layer software for subframe n+1:

- PUSCH_act(n+1)
- UL_BW(n+1 )
- band(n+1)

IF PUSCH_act(n+1) = on THEN
TX_dec(n+1) = PUSCH
Get MPUSCH(n+1) from the PHY layer software for subframe n+1
ELSE
TX_dec(n+1) = PUCCH
ENDIF

According to an implementation, the step 705 may comprise estimating energy consumption for UL processing in subframe n+2 with at least one of the following steps:

Estimating an estimated energy consumption for UL processing in subframe n+2:

$$E_{est,UL}(n+2) = E_{real,UL}(n)$$

According to an implementation, the step 705 may comprise estimating energy consumption for DL processing and DL/UL independent processing in subframes n, n+1 and n+2 with at least one of the following steps:

- Get estimated DL activity and measurement activity from PHY layer software for subframes n, n+1 and n+2:

$DL\_act_{est}(n)$, $meas\_act_{est}(n)$
$DL\_act_{est}(n+1)$, $meas\_act_{est}(n+1)$
$DL\_act_{est}(n+2)$, $meas\_act_{est}(n+2)$

- Calculate estimated energy consumption for DL and DL/UL independent processing for subframes n, n+1 and n+2:

$E_{est,DL}(n) = f_{E,DL}(DL\_act_{est}(n), DL\_RBs_{last}, DL\_BW_{last}, meas\_act_{est}(n))$
$E_{est,DL}(n+1) = f_{E,DL}(DL\_act_{est}(n+1), DL\_RBs_{last}, DL\_BW_{last}, meas\,act_{est}(n+1))$
$E_{est,DL}(n+2) = f_{E,DL}(DL\_act_{est}(n+2), DL\_RBs_{last}, DL\_BW_{last}, meas\_act_{est}(n+2))$

According to an implementation, the step 709 may comprise a recalculation of TX decision parameters with at least one of the following steps:

The UL TX Supervisor functionality or the method of Fig. 7 may recalculate the TX decision parameters because of a received update of $E_{average}$.

If limit_type = 0 (peak current) THEN
Elow = (EWC,UL,current + EWC,DL - Eaverage) / (EWC,UL,current + EWC,DL - Emax,current) *
max(Ebuffer, EWC,UL,current + EWC,DL - Emax,current);
Ehigh = (EWC,UL,current + EWC,DL - Eaverage) / (EWC,UL,current + EWC,DL - Emax,current) *
Emax,storage;
Econtrol(n-1) = (EWC,UL,current + EWC,DL - Eaverage) / (EWC,UL,current + EWC,DL Eaverage,last) * Econtrol(n-1);
ELSE
Elow = max(Ebuffer, EWC,UL,heat + EWC,DL - Eaverage);
ENDIF
Eaverage,last = Eaverage;

It shall be noted that the max() operation to determine Elow may be made in order to secure that Elow is at least big enough to allow a worst case energy consumption in the subsequent subframe for critical events like data retransmissions and ACK/NACK transmissions. Such securing may also be performed in an implementation by the Environmental Condition Detection functionality. In this case, the UL TX Supervisor may subscribe for updates of Ebuffer and may to apply them in this step.

According to an implementation, the step 709 may comprise an estimation of an energy control function after subframe n. The energy control function value Econtrol(n) after subframe n may be estimated by using the calculated actual, i.e. real, energy consumption for UL processing and the estimated energy consumption for DL and DL/UL independent processing:

$$E_{control}(n) = min(E_{high}, E_{average,last} + E_{control}(n-1) - E_{real,UL}(n) - E_{est,DL}(n))$$
$$E_{control,last} = E_{control}(n)$$

According to an implementation, Econtrol(n) may be stored for a later usage for the determination of Econtrol after a sleep phase.

According to an implementation, the step 712 may comprise an estimation of energy control function after subframe n+1. In subframe n+1, the actual, i.e. real, uplink transmit power UL TX power values are available in the PHY layer software. Therefore the UL power consumption estimations which were done 2 subframes before are replaced by calculated values. Thus, the energy control function value Econtrol(n+1 ) after subframe n+1 may be estimated by calculating the actual energy consumption for UL processing and using the estimated energy consumption for DL and DL/UL independent processing:

IF TX_dec(n+1) = PUSCH THEN Get PPUSCH(n+1) and MPUSCH(n+1) from PHY layer software

PPUCCH(n+1) = off

Get PSRS(n+1) from PHY layer software

PPUSCH,last = PPUSCH(n+1 )

MPUSCH,last = MPUSCH(n+1)

ELSEIF TX_dec(n+1) = PUCCH THEN

PPUSCH(n+1) = off

Get PPUCCH(n+1) from PHY layer software

Get PSRS(n+1) from PHY layer software

IF PPUCCH(n+1) t- off THEN

Get nCQI(n+1) and nHARQ(n+1) from PHY layer software

PPUCCH,last = PPUCCH(n+1 )

nCQI,last = nCQI(n+1)

nHARQ,last = nHARQ(n+1 )

ENDIF

ELSEIF TX_dec(n+1) = SRS THEN

PPUSCH(n+1) = PPUCCH(n+1 ) = off

Get PSRS(n+l) from PHY layer software

ELSE

PPUSCH(n+1) = PPUCCH(n+1 ) = PSRS(n+1) = off

ENDIF

Ereal,UL(n+1) fE,UL(PPUSCH(n+1), PPUCCH(n+1), PSRS(n+1) MPUSCH(n+1),

UL_BW(n+1), band(n+1), energy_type)

Econtrol(n+1) = min(Ehigh, Eaverage,last + Econtrol(n) - Ereal,UL(n+1) - Eest,DL(n+1))

IF PSRS(n+1) ≠ off THEN

Get MSRS(n+l) from PHY layer software

PSRS,last = PSRS(n+1)

MSRS,last = MSRS(n+1)

ENDIF

According to an implementation, the step 713 may comprise an estimation of energy control function after subframe n+2. The energy Econtrol(n+2) stored in the capacitor after subframe n+2 is estimated by using the estimated energy consumption for UL processing and the estimated energy consumption for DL and DL/UL independent processing:

Econtrol(n+2) = min(Ehigh, Eaverage,last + Econtrol(n+1) - Eest,UL(n+2) - Eest,DL(n+2))

According to an implementation, the step 715 may comprise a TX decision for the certain uplink subframe n+3, i.e. determining upon the basis of the available energy whether to reduce an uplink transmission rate in the certain uplink frame.

In step 715, the decision may be made whether to transmit PUSCH, PUCCH, SRS only or nothing in subframe n+3 based on the available energy in the communication device and, optionally, on the estimated energy consumption and/or heat dissipation for subframe n+3.

In step 721, a determination of energy control function after subframe n-1 may be performed as follows: Get real DL activity and parameters from PHY layer software for subframe n-1:*

DL_act(n-1), DL_RBs(n-1),

DL_BW(n-1),

meas_act(n-1)

IF DL_act(n-1) = PDSCH THEN

DL_RBslast = DL_RBs(n-1)

DL_BWlast = DL_BW(n-1)

ENDIF

Calculate energy consumption for DL and DL/UL independent processing for n-1:
Ereal,DL(n-1)= fE,DL(DL_act(n-1), DL_RBs(n-1), DL_BW(n-1), meas_act(n-1))
In case there is an energy source attached to the communication device the stored energy is measured with a certain period and the calculated value is replaced with the measured value if needed.
IF limit_type = 0 (peak current) THEN
IF ((n-2) mod periodstorage,meas) = offsetstorage,meas THEN
Get Estorage(n-2) from Environmental Condition Detection functionality
IF Eaverage = Emax,current THEN
Econtrol(n-2) = (EWC,UL,current + EWC,DL - Eaverage) / (EWC,UL,current + EWC,DL - Emax,current) * Estorage(n-2) ELSE
Econtrol(n-2) = min(Econtrol(n-2), (EWC,UL,current + EWC,DL - Eaverage) / (EWC.UL.current + EWC,DL - Emax, current)* Estorage(n-2))
ENDIF
ENDIF
Calculate energy control function value $E_{control}$(n-1) after subframe n-1:

Econtrol(n-1) = min(Ehigh, Eaverage,last + Econtrol(n-2) - Ereal,UL(n-1) - Ereal,DL(n-1 ))

It shall be noted, that it is assumed that the used band does not have an effect on the energy consumption in DL. Therefore it is not considered for the calculation of Ereal,DL(n-1).

In step 10, an after-sleep determination of energy control function after subframe n-1 may be performed as follows:

Get the current UL subframe number from the PHY layer software functionality: n Determine the sleep duration in number of subframes: dsleep

Econtrol(n-1) = min(Ehigh, Econtrol,last + dsleep * (Eaverage,last- Esleep))

Fig. 8 shows further steps which may be performed in the step 715 of determining upon the basis of the available energy whether to reduce an uplink transmission rate in the certain uplink frame.

In step 801, available energy for subframe n+3 is estimated. Thereafter, in step 803, a downlink (DL) activity for subframes n+3 and n may be estimated.

Thereafter, in step 805, the downlink energy consumption for subframe n+3 may be estimated.

Thereafter, in step 807, uplink parameters for subframe n+3 may be determined. Thereafter, in step 809, the transmit power for a sounding reference symbol, BSRS, for subframe n+3 may be estimated. Thereafter, in step 811, the state of the variable PUSCH_att(n+3) is determined. In the case of a TX or RTX state, in step 813, a delta between an available energy and energy consumption of the communication device may be estimated assuming PUSCH for subframe n+3. Thereafter, in step 815, the energy delta is compared with a lower threshold Elow. If the energy delta is greater or equal than zero and smaller than Elow, then in step 817, a downlink activity is estimated. If the downlink activity indicates the OFF state, or an inactive state, then, in step 819, the decision to transmit PUSCH in subframe n+3 is performed. Otherwise, in step 821, the variable PUSCH_att(n+3) is determined. In case of RTX, the method proceeds with the step 819. Otherwise, the method proceeds with the step 823 in which an energy delta between available energy and communication device energy consumption is estimated. Thereafter, the method proceeds with step 825 which corresponds to step 815. If the energy delta is greater or equal than Elow, then the method proceeds with the step 827 in which a decision to transmit PUCCH in subframe n+3 is made. Otherwise, the method proceeds with the step 829 in which the state of the variable SRS_act(n+3) is determined.

Optionally, after the step 825, the step 816 may be performed in which nHARQ is compared with zero. If nHARQ is greater that zero, then the method proceeds with the step 827. Otherwise, the method proceeds with the step 829.

If the sounding reference symbol is to be transmitted, then the method proceeds with step 831 in which an energy delta between an available energy and an energy consumption of the communication device is estimated upon the assuming that the SRS is transmitted only for subframe n+3. After step 831, the method proceeds with the step 833 which may correspond to the step 815. If the energy delta is greater than or equal to Elow, then the method proceeds with the step 835 in which a decision to transmit a SRS only in subframe n+3 is made. Thereafter, the method proceeds with step 837 in which the transmission decision is forwarded.

The step 837 is also reached after the step 819.

With reference to step 829, if the SRS symbol is not to be transmitted, then the method proceeds with step 839 in which an uplink energy consumption is estimated assuming that there is no uplink transmission for subframe n+3. Thereafter, in step 841, a decision is made as to whether to suppress the uplink subframe n+3. Thereafter, the method proceeds with step 837.

According to some embodiments, the decision whether to transmit PUCCH may be performed also for a case in which nothing needs to be transmitted on PUCCH which allows a transmission of a sounding reference symbol on PUCCH which may be requested by a MAC layer in a later stage.

In step 801, an estimation of available energy for subframe n+3 may be performed as follows:

Calculate estimated energy which is available for subframe n+3:

$$E_{available}(n+3) = E_{average,last} + E_{control}(n+2).$$

In step 8-3, an estimation of DL activity for subframes n+3 and n may be performed as follows:

Get estimated DL activity from the PHY layer software for subframes n+3 and n and measurement activity from the PHY layer software for subframe n+3:

$$DL\_actest(n+3), meas\_actest(n+3),$$

$$DL\_actest(n).$$

In step 805, an estimation of DL energy consumption for subframe n+3 may be performed as follows:

Calculate estimated energy consumption for DL and DL/UL independent processing for subframe n+3:

$$E_{est,DL}(n+3) = f_{E,DL}(DL\_actest(n+3), DL\_RBslast, DL\_BWlast, meas\_actest(n+3))$$

In step 807, a determination of UL parameters for subframe n+3 may be performed as follows:

Get the following parameters from the PHY layer software for subframe n+3:

PUSCH_act(n+3),
nHARQ(n+3),
SRS_act(n+3),
UL_BW(n+3),
band(n+3).

**[0129]** In step 809, an estimation of PSRS for subframe n+3 may be performed as follows:

IF SRS_act(n+3) = on THEN Get MSRS(n+3) from the PHY layer software for subframe n+3

Calculate Pest,SRS(n+3) from the last transmitted SRS power PSRS,last by using the PSRS formula in 3GPP TS36.213 and replacing MSRS,last by MSRS(n+3).

ELSE Pest,SRS(n+3) = off

ENDIF

**[0130]** In step 813, an estimation of delta between available energy and communication device energy consumption assuming PUSCH transmission for subframe n+3 may be performed as follows:

Get MPUSCH(n+3) from the PHY layer software for subframe n+3
Calculate Pest,PUSCH(n+3) from the last transmitted PUSCH power PPUSCH,last by using the PPUSCH formula in 3GPP TS36.213 and replacing MPUSCH,last by MPUSCH(n+3). In case MPUSCH(n+3) = "not available, then Pest,PUSCH(n+3) = PPUSCH,last. MPUSCH(n+3) is not available in subframe n in case of retransmissions.
Eest,UL(n+3) = fE,UL(Pest,PUSCH(n+3), off, Pest,SRS(n+3), MPUSCH(n+3), UL_BW(n+3), band(n+3), energy_type)
Eest,Δ(n+3) = Eavailable(n+3) - Eest,UL(n+3) - Eest,DL(n+3)

**[0131]** In step 823, an estimation of delta between available energy and communication device energy consumption assuming PUCCH transmission for subframe n+3 may be performed as follows:

Get nCQI(n+3) from the PHY layer software for subframe n+3,

Calculate Pest,PUCCH(n+3) from the last transmitted PUCCH power PPUCCH,last by using the PPUCCH formula in 3GPP TS36.213 and replacing nCQI,last by nCQI(n+3) and nHARQ,last by nHARQ(n+3).

Eest,UL(n+3) = fE,UL(off, Pest,PUCCH(n+3), Pest,SRS(n+3), 0, UL_BW(n+3), band(n+3), energy_type)

Eest,Δ(n+3) = Eavailable(n+3) - Eest,UL(n+3) - Eest,DL(n+3)

**[0132]** In step 831, an estimation of delta between available energy and communication device energy consumption assuming SRS only transmission for subframe n+3 may be performed as follows:

Eest,UL(n+3) = fE,UL(off, off, Pest,SRS(n+3), 0, UL_BW(n+3), band(n+3), energy_type)

Eest,Δ(n+3) = Eavailable(n+3) - Eest,UL(n+3) - Eest,DL(n+3)

**[0133]** In step 839, an estimation of UL energy consumption assuming no UL transmission for subframe n+3 may be performed as follows:

Eest,UL(n+3) = fE,UL(off, off, off, 0, UL_BW(n+3), band(n+3), energy_type)

**[0134]** According to some implementations, a power or an energy consumption reduction of the communication device may be achieved as the three options shown in Fig. 3 enable to make the TX decision, i.e. the decision whether to reduce the transmission data rate, prior to unnecessarily starting the MAC layer and PHY layer processing.

**[0135]** According to some implementations, a reduced impact on PHY layer and MAC layer implementation as PHY layer and MAC processing is not unnecessarily started. In particular, a roll back to original state may be avoided in case the decision is to suppress UL transmission.

According to some implementations, the DL or UL HARQ instances are not unnecessarily engaged with more than one retransmission.

According to some implementations, an alignment of the UL throughput throttling behavior to a DTX scheme in UL may be obtained in order to not suppress UL subframes due to UL Throughput Throttling, i.e. transmission rate reduction. According to some implementations, for all different single UL throughput throttling applications such as peak current limitation, average current limitation, heat dissipation limitation, overheating protection, the same decision algorithm can be applied. This may reduce the implementation and test efforts.

According to some implementations, also a peak current limitation and an average limitation in parallel the same decision algorithm can be applied. This may reduce the implementation and test efforts.

The present invention may be embodied in a user equipment comprising a power supply, a processing unit, a network interface, and a transmission manipulation circuit that is adapted to suppress (or reduce) a data transmission in a forthcoming transmission interval dependent on the available energy for one or a plurality of forthcoming transmission intervals and on an expected energy consumption for these transmission intervals.

The particular combinations of elements and features in the above detailed embodiments are exemplary only; the interchanging and substitution of these embodiments with other embodiments disclosed herein are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. The invention's scope is defined in the following claims and the equivalents thereto. Furthermore, reference signs used in the description and claims do not limit the scope of the invention as claimed.

**Claims**

1. A method for controlling within a communication device (201) an uplink data transmission from the communication device (201) to a network node (204), the method comprising:

   - receiving (101) from the network node (204) a scheduling grant for an uplink data transmission in a upcoming certain uplink frame (309);
   - estimating (103) an available energy for a data transmission according to the scheduling grant in the certain uplink frame; and
   - deciding (105, 715) on the basis of the estimated available energy whether to suppress a data transmission according to the scheduling grant in the certain uplink frame,
   - wherein estimating (103) the available energy takes into account an expected activity of the communication device during the certain uplink frame, and
   - wherein the decision to suppress the data transmission is made so early that a corresponding media access control, MAC, layer and physical layer processing is not started unnecessarily.

2. The method of the preceding claim, wherein in case that the timing advance between the uplink frames and the downlink frames is zero, the downlink frame (303) to decide about suppression of data transmission is three frames in advance to the certain uplink frame.

3. The method of any one of the preceding claims, wherein estimating (103) the available energy comprises taking into account an energy available at the time of the decision and an expected energy difference thereto between the time of said decision and a time just after the scheduled data transmission.

4. The method of any one of the preceding claims, wherein the available energy comprises an energy stored in an energy storage associated to the uplink data transmission.

5. The method of any one of the preceding claims, wherein estimating (103) the available energy comprises averaging over an energy consumption of the communication device, in particular energy consumption which is related to a downlink or an uplink processing during a plurality of consecutive uplink frames, the plurality of uplink frames comprising the certain uplink frame and at least one uplink frame which precedes the certain uplink frame.

6. The method of any one of the preceding claims, wherein estimating (103) the available energy comprises:

   - determining an actual energy consumption of the communication device after a time point which precedes the certain uplink frame; and

- utilizing the actual energy consumption for estimating the available energy.

7. The method of any one of the preceding claims, wherein the available energy is estimated upon the basis of an expected activity of the communication device in advance to and/or during the certain uplink frame, the expected activity comprises at least one of:

- a transmission of data according to the scheduling grant,
- a transmission or reception of control data,
- a transmission of an acknowledgement or of a non-acknowledgment,
- a transmission of a channel quality indicator;
- a transmission of a sounding reference signal,
- a channel measurement,
- a downlink data reception,
- a data processing, and
- a basic power consumption of the communication device.

8. The method of any one of the preceding claims, wherein the available energy is estimated upon the basis of look-up tables, the look-up tables linking at least one of the following parameters with available energies:

- stored energy in an energy source, in particular in a capacitor ,
- transmit power of the communication device, in particular a transmit power for a physical uplink control channel (PUCCH) and/or for a physical uplink shared channel (PUSCH),
- a number of resource blocks for a PUSCH transmission or a number of bits, in particular a number of channel quality indicator bits or hybrid automatic repeat request bits of a PUCCH transmission,
- transmit power for transmitting a sounding reference signal,
- uplink bandwidth,
- frequency band,
- a number of resource blocks for a PUSCH reception,
- measurement activity,
- consumed energy by the communication device, in particular in an active state or in an inactive state.

9. The method of any one of the preceding claims, wherein the available energy is iteratively determined using of at least one of the following formulas:

$$E_{control}(n-1) = (E_{WC,UL,current} + E_{WC,DL} - E_{average}) / (E_{WC,UL,current} + E_{WC,DL} - E_{max,current}) * E_{max,storage},$$

$$E_{control}(n) = min(E_{high}, E_{average,last} + E_{control}(n-1) - E_{real,UL}(n) - E_{est,DL}(n)),$$

$$E_{control}(n+1) = min(E_{high}, E_{average,last} + E_{control}(n) - E_{real,UL}(n+1) - E_{est,DL}(n+1)),$$

$$E_{control}(n+2) = min(E_{high}, E_{average,last} + E_{control}(n+1) - E_{est,UL}(n+2) - E_{est,DL}(n+2)),$$

$$E_{available}(n+3) = E_{average,last} + E_{control}(n+2),$$

wherein n+3 is a numbering index of the certain uplink frame, n+2 is a numbering index indicating an uplink frame preceding the certain uplink frame, wherein n+1 is a numbering index indicating a (n+1)th uplink frame to precede the certain uplink frame, wherein n a numbering index indicating an uplink frame to precede the (n+1)-th uplink frame, wherein n-1 is a numbering index indicating an uplink frame to precede the n-th uplink frame, wherein

- $E_{high}$ denotes an upper energy limit,

- $E_{average}$ denotes an average energy which may be dissipated by the communication device or which may be provided by an energy source powering the communication device within one frame,
- $E_{average,last}$ denotes the previously determined $E_{average}$,
- $E_{real,UL}$ denotes an actual energy consumption of the communication device for UL related processing for a respective uplink frame,
- $E_{real,UL}$ denotes an estimated energy consumption of the communication device for UL related processing for a respective uplink frame,
- $E_{est,DL}$ denotes an estimated energy consumption of the communication device for downlink related processing and for downlink or uplink independent processing for a respective downlink frame,
- $E_{control}$ denotes an available energy after the respective uplink frame,
- $E_{max,storage}$ denotes a maximum energy which may be provided by the energy source,
- $E_{avalable}(n+3)$ denotes the available energy for the certain uplink and downlink frame,
- $E_{WC,UL,current}$ denotes a worst case energy consumption for UL processing,
- $E_{WC,DL}$ denotes a worst case energy consumption for UL processing, and
- $E_{max,current}$ denotes a maximum energy which may be drawn from an energy source.

10. The method of any one of the preceding claims, wherein estimating (103) the available energy takes into account at least one of:

- an energy status of an energy source powering the communication device,
- an energy status of the energy storage associated to the uplink data transmission,
- a maximum energy amount which is storable by the energy storage,
- an allowed average heat energy dissipation,
- a maximum and/or an average current amplitude, and
- a maximum and/or an average power to be consumed.

11. The method of any one of the preceding claims, wherein estimating (103) the available energy comprises periodically measuring an amount of energy stored in the energy storage.

12. The method of any one of the preceding claims, wherein the uplink transmission is reduced in the certain uplink frame, if the available energy is equal to or lower than an energy threshold.

13. The method of the preceding claim, wherein a transmission of only certain data is performed, if the available energy is equal to or lower than an energy threshold, the certain data comprising at least one of:

- data scheduled for re-transmission,
- an uplink transmission which is the last one according to the current DRX downlink configuration, and
- control data, in particular an acknowledgment or a non-acknowledgement.

14. A communication device (201) for communicating with a network node (204), over a communication network, the communication device comprising:

- a receiver (202) adapted for receiving a scheduling grant from the network node (204), to grant a transmission of uplink data in a certain upcoming uplink frame; and
- a processor (203) adapted for estimating an available energy for the transmission in the certain uplink frame, and for deciding based on the estimated available energy whether to suppress a data transmission according to the scheduling grant taking into account an expected activity of the communication device during the certain uplink frame,
- wherein the processor (203) is further adapted to perform the decision to suppress the data transmission in a downlink frame is made so early that a corresponding Media Access Control, MAC, layer and physical layer processing is not started unnecessarily.

**Patentansprüche**

1. Verfahren zur Steuerung einer Aufwärtsdatenübertragung von einer Kommunikationsvorrichtung (201) an einen Netzknoten (204) innerhalb der Kommunikationsvorrichtung (201), wobei das Verfahren umfasst:

- Empfangen (101) einer Dispositionsfreigabe für eine Aufwärtsdatenübertragung in einem bevorstehenden bestimmten Aufwärtsrahmen (309) vom Netzknoten (204);
- Schätzen (103) einer verfügbaren Energie für eine Datenübertragung gemäß der Dispositionsfreigabe in dem bestimmten Aufwärtsrahmen; und
- Entscheiden (105, 715) auf der Basis der geschätzten verfügbaren Energie, ob eine Datenübertragung gemäß der Dispositionsfreigabe in dem bestimmten Aufwärtsrahmen unterdrückt werden soll,
- wobei das Schätzen (103) der verfügbaren Energie eine erwartete Aktivität der Kommunikationsvorrichtung während des bestimmten Aufwärtsrahmens berücksichtigt, und
- wobei die Entscheidung, die Datenübertragung zu unterdrücken, so früh getroffen wird, dass eine entsprechende Verarbeitung einer Medienzugriffssteuerung, MAC,-Schicht und einer physikalischen Schicht nicht unnötig gestartet wird.

2. Verfahren nach dem vorhergehenden Anspruch, wobei, falls der Taktvorlauf zwischen den Aufwärtsrahmen und den Abwärtsrahmen null ist, der Abwärtsrahmen (303) zum Entscheiden über die Unterdrückung einer Datenübertragung dem bestimmten Aufwärtsrahmen drei Rahmen voraus ist.

3. Verfahren nach einem der vorhergehenden Ansprüche, wobei das Schätzen (103) der verfügbaren Energie ein Berücksichtigen einer zum Zeitpunkt der Entscheidung verfügbaren Energie und einer erwarteten Energiedifferenz dazu zwischen dem Zeitpunkt der Entscheidung und einem Zeitpunkt unmittelbar nach der disponierten Datenübertragung umfasst.

4. Verfahren nach einem der vorhergehenden Ansprüche, wobei die verfügbare Energie eine Energie umfasst, die in einem Energiespeicher gespeichert ist, der mit der Aufwärtsdatenübertragung assoziiert ist.

5. Verfahren nach einem der vorhergehenden Ansprüche, wobei das Schätzen (103) der verfügbaren Energie ein Mitteln über einen Energieverbrauch der Kommunikationsvorrichtung, insbesondere einen Energieverbrauch umfasst, der mit einer Abwärts- oder einer Aufwärtsverarbeitung während einer Mehrzahl von aufeinander folgenden Aufwärtsrahmen in Zusammenhang steht, wobei die Mehrzahl von Aufwärtsrahmen den bestimmten Aufwärtsrahmen und mindestens einen Aufwärtsrahmen umfasst, der dem bestimmten Aufwärtsrahmen vorangeht.

6. Verfahren nach einem der vorhergehenden Ansprüche, wobei das Schätzen (103) der verfügbaren Energie umfasst:

- Bestimmen eines tatsächlichen Energieverbrauchs der Kommunikationsvorrichtung nach einem Zeitpunkt, der dem bestimmten Aufwärtsrahmen vorangeht; und
- Verwenden des tatsächlichen Energieverbrauchs zum Schätzen der verfügbaren Energie.

7. Verfahren nach einem der vorhergehenden Ansprüche, wobei die verfügbare Energie auf der Basis einer erwarteten Aktivität der Kommunikationsvorrichtung vor dem und/oder während des bestimmten Aufwärtsrahmens geschätzt wird, wobei die erwartete Aktivität mindestens eines von Folgendem umfasst:

- einer Übertragung von Daten gemäß der Dispositionsfreigabe,
- einer Übertragung oder einem Empfang von Steuerdaten,
- einer Übertragung einer Bestätigung oder Nichtbestätigung,
- einer Übertragung eines Kanalqualitätsindikators;
- einer Übertragung eines Sondierungsreferenzsignals,
- einer Kanalmessung,
- einem Abwärtsdatenempfang,
- einer Datenverarbeitung und
- einem Basisleistungsverbrauch der Kommunikationsvorrichtung.

8. Verfahren nach einem der vorhergehenden Ansprüche, wobei die verfügbare Energie auf der Basis von Nachschlagetabellen geschätzt wird, wobei die Nachschlagetabelle mindestens einen der folgenden Parameter mit verfügbaren Energien verknüpft:

- gespeicherte Energie in einer Energiequelle, insbesondere in einem Kondensator,
- Sendeleistung der Kommunikationsvorrichtung, insbesondere eine Sendeleistung für einen physikalischen Aufwärtssteuerkanal (PUCCH) und/oder einen gemeinsamen physikalischen Aufwärtskanal (PUSCH),
- eine Anzahl von Betriebsmittelblöcken für eine PUSCH-Übertragung oder eine Anzahl von Bits, insbesondere eine Anzahl von Kanalqualitätsindikator-Bits oder Bits von hybriden automatischen Wiederholungsanforderungen einer PUCCH-Übertragung,
- Sendeleistung zum Senden eines Sondierungsreferenzsignals,
- Aufwärtsbandbreite,
- Frequenzband,
- eine Anzahl von Betriebsmittelblöcken für einen PUSCH-Empfang,
- Messaktivität,
- durch die Kommunikationsvorrichtung verbrauchte Energie, insbesondere in einem aktiven Zustand oder in einem inaktiven Zustand.

9. Verfahren nach einem der vorhergehenden Ansprüche, wobei die verfügbare Energie unter Verwendung mindestens einer der folgenden Formeln iterativ bestimmt wird:

$$E_{control}(n - 1) \; (E_{\overline{WC},UL,current} + E_{\overline{WC},DL} - E_{average}) \; / \; (E_{\overline{WC},UL,current} + E_{\overline{WC},DL} - E_{max,current}) \; * \; E_{max,storage},$$

$$E_{control}(n) = min(E_{high}, \; E_{average,last} + E_{control}(n - 1) - E_{real,UL}(n) - E_{est,DL}(n)),$$

$$E_{control}(n + 1) = min(E_{high}, \; E_{average,last} + E_{control}(n) - E_{real,UL}(n + 1) - E_{est,DL}(n + 1)),$$

$$E_{control}(n + 2) = min(E_{high}, \; E_{average,last} + E_{control}(n + 1) - E_{est,UL}(n + 2) - E_{est,DL}(n + 2)),$$

$$E_{available}(n + 3) = E_{average,last} + E_{control}(n + 2),$$

wobei n + 3 ein Nummerierungsindex des bestimmten Aufwärtsrahmen ist, n + 2 ein Nummerierungsindex ist, der einen Aufwärtsrahmen anzeigt, der dem bestimmten Aufwärtsrahmen vorangeht, wobei n + 1 ein Nummerierungsindex ist, der einen (n + 1)-ten Aufwärtsrahmen anzeigt, der dem bestimmten Aufwärtsrahmen vorangeht, wobei n ein Nummerierungsindex ist, der einen Aufwärtsrahmen anzeigt, der dem (n + 1)-ten Aufwärtsrahmen vorangeht, wobei n - 1 ein Nummerierungsindex ist, der einen Aufwärtsrahmen anzeigt, der dem n-ten Aufwärtsrahmen vorangeht, wobei

- $E_{high}$ eine obere Energiegrenze bezeichnet,
- $E_{average}$ eine mittlere Energie bezeichnet, welche durch die Kommunikationsvorrichtung abgeleitet werden kann oder welche durch eine Energiequelle bereitgestellt werden kann, welche die Kommunikationsvorrichtung innerhalb eines Rahmens speist,
- $E_{average,last}$ die vorher bestimmte $E_{average}$ bezeichnet,
- $E_{real,UL}$ einen tatsächlichen Energieverbrauch der Kommunikationsvorrichtung für UL-bezogene Verarbeitung für einen jeweiligen Aufwärtsrahmen bezeichnet,
- $E_{real,UL}$ einen geschätzten Energieverbrauch der Kommunikationsvorrichtung für UL-bezogene Verarbeitung für einen jeweiligen Aufwärtsrahmen bezeichnet,

- $E_{est,DL}$ einen geschätzten Energieverbrauch der Kommunikationsvorrichtung für abwärtsstreckenbezogene Verarbeitung und für abwärts- und abwärtsstreckenunabhängige Verarbeitung für einen jeweiligen Abwärtsrahmen bezeichnet,
- $E_{control}$ eine verfügbare Energie nach dem jeweiligen Aufwärtsrahmen bezeichnet,
- $E_{max,storage}$ eine maximale Energie bezeichnet, die durch die Energiequelle bereitgestellt werden kann,
- $E_{available}$ (n+3) die verfügbare Energie für den bestimmten Aufwärts- oder Abwärtsrahmen bezeichnet,
- $E_{WC,UL,current}$ einen ungünstigsten Energieverbrauch für UL-Verarbeitung bezeichnet,
- $E_{WC,DL}$ einen ungünstigsten Energieverbrauch für UL-Verarbeitung bezeichnet, und
- $E_{max,current}$ eine maximale Energie bezeichnet, die von einer Energiequelle entnommen werden kann.

10. Verfahren nach einem der vorhergehenden Ansprüche, wobei das Schätzen (103) der verfügbaren Energie mindestens eines von Folgendem berücksichtigt:

- einem Energiestatus einer Energiequelle, welche die Kommunikationsvorrichtung speist,
- einem Energiestatus des Energiespeichers, der mit der Aufwärtsdatenübertragung assoziiert ist,
- einer maximalen Energiemenge, die durch den Energiespeicher gespeichert werden kann,
- einer zulässigen mittleren Wärmeenergieableitung,
- einer maximalen und/oder einer mittleren Stromamplitude, und
- einer zu verbrauchenden maximalen und/oder mittleren Leistung.

11. Verfahren nach einem der vorhergehenden Ansprüche, wobei das Schätzen (103) der verfügbaren Energie ein periodisches Messen einer Energiemenge umfasst, die im Energiespeicher gespeichert wird.

12. Verfahren nach einem der vorhergehenden Ansprüche, wobei die Aufwärtsübertragung in dem bestimmten Aufwärtsrahmen reduziert wird, wenn die verfügbare Energie gleich oder unter einer Energieschwelle ist.

13. Verfahren nach einem der vorhergehenden Ansprüche, wobei eine Übertragung nur von bestimmten Daten durchgeführt wird, wenn die verfügbare Energie gleich oder unter einer Energieschwelle ist, wobei die bestimmten Daten mindestens welche von Folgenden umfassen:

- zur Wiederholungssendung disponierten Daten,
- einer Aufwärtsübertragung, welche die letzte gemäß der aktuellen DRX-Abwärtskonfiguration ist, und
- Steuerdaten, insbesondere einer Bestätigung oder einer Nichtbestätigung.

14. Kommunikationsvorrichtung (201) zum Kommunizieren mit einem Netzknoten (204) über ein Kommunikationsnetz, wobei die Kommunikationsvorrichtung umfasst:

- einen Empfänger (202), der so ausgelegt ist, dass er eine Dispositionsfreigabe vom Netzknoten (204) empfängt, um eine Übertragung von Aufwärtsdaten in einem bestimmten bevorstehenden Aufwärtsrahmen freizugeben; und
- einen Prozessor (203), der so ausgelegt ist, dass er eine verfügbare Energie für die Übertragung in dem bestimmten Aufwärtsrahmen schätzt und basierend auf der geschätzten verfügbaren Energie unter Berücksichtigung einer erwarteten Aktivität der Kommunikationsvorrichtung während des bestimmten Aufwärtsrahmens entscheidet, ob eine Datenübertragung gemäß der Dispositionsfreigabe unterdrückt werden soll,
- wobei der Prozessor (203) ferner so ausgelegt ist, dass er die Entscheidung, die Datenübertragung in einem Abwärtsrahmen zu unterdrücken, so früh trifft, dass eine entsprechende Verarbeitung einer Medienzugriffssteuerung, MAC,-Schicht und einer physikalischen Schicht nicht unnötig gestartet wird.

## Revendications

1. Procédé de commande à l'intérieur d'un dispositif de communication (201) d'une transmission de données en liaison montante du dispositif de communication (201) à un noeud de réseau (204), le procédé comprenant de :

- recevoir (101) depuis le noeud de réseau (204) une autorisation de programmation pour une transmission de données en liaison montante dans une certaine trame de liaison montante à venir (309) ;
- estimer (103) une énergie électrique disponible pour une transmission de données selon l'autorisation de programmation dans la certaine trame de liaison montante ; et

- décider (105, 715) sur la base de l'énergie électrique disponible estimée si supprimer une transmission de données selon l'autorisation de programmation dans la certaine trame de liaison montante,
- dans lequel estimer (103) l'énergie électrique disponible prend en compte une activité escomptée du dispositif de communication pendant la certaine trame de liaison montante, et
- dans lequel la décision de supprimer la transmission de données est prise assez tôt pour qu'une couche de commande d'accès au média, MAC, correspondante et un traitement de couche de données ne soient démarrés inutilement.

2. Procédé selon la revendication précédente, dans lequel au cas où l'avance de synchronisation entre les trames de liaison montante et les trames de liaison descendante est zéro, la trame de liaison descendante (303) décidant de la suppression de la transmission de données est trois trames en avance de la certaine trame de liaison montante.

3. Procédé selon une quelconque des revendications précédentes, dans lequel estimer (103) l'énergie électrique disponible comprend de prendre en compte une énergie électrique disponible au moment de la décision et une différence d'énergie électrique escomptée avec celle-ci entre le moment de ladite décision et un moment juste après la transmission de données programmée.

4. Procédé selon une quelconque des revendications précédentes, dans lequel l'énergie électrique disponible comprend une énergie électrique stockée dans un stockage d'énergie associé à la transmission de données en liaison montante.

5. Procédé selon une quelconque des revendications précédentes, dans lequel estimer (103) l'énergie électrique disponible comprend de calculer la moyenne d'une consommation d'énergie électrique du dispositif de communication, en particulier la consommation d'énergie électrique qui est relative à une traitement de liaison descendante ou liaison montante pendant une pluralité de trames de liaison montante consécutives, la pluralité de trames de liaison montante comprend la certaine trame de liaison montante et au moins une trame de liaison montante qui précède la certaine trame de liaison montante.

6. Procédé selon une quelconque des revendications précédentes, dans lequel estimer (103) l'énergie électrique disponible comprend de :

- déterminer une consommation d'énergie électrique effective du dispositif de communication après un point temporel qui précède la certaine trame de liaison montante ; et
- utiliser la consommation d'énergie électrique effective pour estimer l'énergie électrique disponible.

7. Procédé selon une quelconque des revendications précédentes, dans lequel l'énergie électrique disponible est estimée sur la base d'une activité escomptée du dispositif de communication en avance de et/ou pendant la certaine trame de liaison montante, l'activité escomptée comprend au moins un de :

- une transmission de données selon l'autorisation de programmation,
- une transmission ou réception de données de commande,
- une transmission d'un accusé de réception ou d'un non accusé de réception,
- une transmission d'un indicateur de qualité de canal,
- une transmission d'un signal de référence de sondage,
- une mesure de canal,
- une réception de données de liaison descendante,
- un traitement de données, et
- une consommation de puissance électrique de base du dispositif de communication.

8. Procédé selon une quelconque des revendications précédentes, dans lequel l'énergie électrique disponible est estimée sur la base de tables de recherche, les tables de recherche reliant au moins un des paramètres suivantes aux énergies électriques disponibles :

- l'énergie électrique mémorisée dans une source d'énergie électrique, en particulier dans un condensateur,
- la puissance d'émission du dispositif de communication, en particulier une puissance d'émission pour un canal de commande de liaison montante physique (PUCCH) et/ou un canal partagé de liaison montante physique (PUSCH),
- un nombre de blocs de ressources pour une transmission PUSCH ou un nombre de bits, en particulier un nombre de bits d'indicateur de qualité de canal ou de bits de demande de répétition automatique hybride d'une transmission PUCCH,
- une puissance d'émission pour émettre un signal de référence de sondage,
- une bande passante de liaison montante,
- une bande de fréquence,
- un nombre de blocs de ressource pour une réception PUSCH,
- une activité de mesure,
- une énergie électrique consommée par le dispositif de communication, en particulier dans un état actif ou dans un état inactif.

9. Procédé selon une quelconque des revendications précédentes, dans lequel l'énergie électrique disponible est déterminée itérativement en utilisant au moins une des formules suivantes:

$$E_{control}(n - 1) \; (E_{\overline{WC},UL,current} + E_{\overline{WC},DL} - E_{average}) \; /$$
$$(E_{\overline{WC},UL,current} + E_{\overline{WC},DL} - E_{max,current}) \; * \; E_{max,storage},$$

$$E_{control}(n) = \min(E_{high}, \; E_{average,last} + E_{control}(n - 1) - E_{real,UL}(n) - E_{est,DL}(n)),$$

$$E_{control}(n + 1) = \min(E_{high}, \; E_{average,last} + E_{control}(n) - E_{real,UL}(n + 1) - E_{est,DL}(n + 1)),$$

$$E_{control}(n + 2) = \min(E_{high}, \; E_{average,last} + E_{control}(n + 1) - E_{est,UL}(n + 2) - E_{est,DL}(n + 2)),$$

$$E_{available}(n + 3) = E_{average,last} + E_{control}(n + 2),$$

dans lequel n+3 est un index de numérotation de la certaine trame de liaison descendante, n+2 est un index de numérotation indiquant une trame de liaison montante précédant la certaine trame de liaison montante, dans lequel n+1 est un index de numérotation indiquant une (n+1)ème trame de liaison montante à précéder la certaine trame de liaison, dans lequel n est un index de numérotation indiquant une trame de liaison montante à précéder la (n+1) ème trame de liaison montante, dans lequel n-1 est un index de numérotation indiquant une trame de liaison montante précédant la n-ème trame de liaison montante, dans lequel

- $E_{high}$ dénote une limité supérieure d'énergie électrique,
- $E_{average}$ dénote une énergie électrique moyenne qui peut être dissipée par le dispositif de communication ou peut être fournie par une source d'énergie électrique énergisant le dispositif de communication à l'intérieur d'une trame,
- $E_{average,last}$ dénote l'$E_{average}$ précédemment déterminé,
- $E_{real,UL}$ dénote une consommation d'énergie électrique effective du dispositif de communication pour un traitement relatif à UL d'une trame de liaison montante respective,
- $E_{real,UL}$ dénote une consommation d'énergie électrique estimée du dispositif de communication pour un traitement relatif à UL d'une trame de liaison montante respective,

- $E_{est,DL}$ dénote une consommation d'énergie électrique estimée du dispositif de communication pour un traitement relatif à la liaison descendante et pour un traitement indépendant de la liaison descendante ou la liaison montante pour une trame de liaison descendante respective,
- $E_{control}$ dénote une énergie électrique disponible après la trame de liaison montante respective,
- $E_{max,storage}$ dénote une énergie électrique maximale qui peut être fournie par la source d'énergie électrique,
- $E_{available}$ (n+3) dénote l'énergie disponible pour la certaine trame de liaison montante et de liaison descendante,
- $E_{WC,UL,current}$ dénote une consommation d'énergie électrique en pire des cas pour un traitement UL,
- $E_{WC,DL}$ dénote une consommation d'énergie électrique en pire des cas pour un traitement UL, et
- $E_{max,current}$ dénote une énergie électrique maximale qui peut être extraite d'une source d'énergie électrique.

10. Procédé selon une quelconque des revendications précédentes, dans lequel estimer (103) l'énergie électrique disponible prend en compte au moins un de :

- un statut d'énergie électrique d'une source d'énergie électrique énergisant le dispositif de communication,
- un statut d'énergie électrique du stockage d'énergie électrique associé à la transmission de données en liaison montante,
- une quantité d'énergie électrique maximale qui peut être stockée par le stockage d'énergie,
- une dissipation d'énergie thermique moyenne autorisée,
- une amplitude de courant maximale et/ou moyenne, et
- une puissance électrique maximale et/ou moyenne à consommer.

11. Procédé selon une quelconque des revendications précédentes, dans lequel estimer (103) l'énergie électrique disponible comprend de mesurer périodiquement une quantité d'énergie électrique stockée dans le stockage d'énergie électrique.

12. Procédé selon une quelconque des revendications précédentes, dans lequel la transmission de liaison montante est réduite dans la certaine trame de liaison montante, si l'énergie électrique disponible est égale ou inférieure à un seuil d'énergie électrique.

13. Procédé selon la revendication précédente, dans lequel une transmission de seulement certaines données est effectuée, si l'énergie disponible est égale ou inférieure à un seuil d'énergie électrique, les certaines données comprenant au moins une de :

- des données programmées en vue d'une retransmission,
- une transmission de liaison montante qui est la dernière selon la configuration de liaison descendante DRX actuelle, et
- des données de commande, en particulier un accusé de réception ou un non accusé de réception.

14. Dispositif de communication (201) pour communiquer avec un noeud de réseau (204), via un réseau de communication, le dispositif de communication comprenant :

- un récepteur (202) adapté pour recevoir une autorisation de programmation provenant du noeud de réseau (204), autoriser une transmission de données de liaison montante dans une certaine trame de liaison montante à venir ; et
- un processeur (203) adapté pour estimer une énergie électrique disponible en vue de la transmission dans la certaine trame de liaison montante et pour décider sur la base de l'énergie électrique disponible estimée si supprimer une transmission de données selon l'autorisation de programmation prenant en compte une activité escomptée du dispositif de communication pendant la certaine trame de liaison montante,
- dans lequel le processeur (203) est en outre adapté pour effectuer la prise de la décision de supprimer la transmission de données dans une trame de liaison descendante assez tôt pour qu'une couche de commande d'accès au média, MAC, correspondante et un traitement de couche physique ne soient pas démarrés inutilement.

EP 2 427 001 B1

```
┌─────────────────────────────────┐
│      Receiving scheduling grant  │  ─── 101
└─────────────────────────────────┘
                 │
┌─────────────────────────────────┐
│     Estimating an available energy │  ─── 103
└─────────────────────────────────┘
                 │
┌─────────────────────────────────┐
│   Determining whether to reduce  │  ─── 105
│      an uplink transmission      │
└─────────────────────────────────┘
```

Fig. 1

Fig. 2

EP 2 427 001 B1

Fig. 3

Fig. 4

Fig. 5

Fig. 6

RRC_Idle -> RRC_Connected

n = (n + 1) mod TTI$_{max}$; wait for UL subframe transition;

**703**

Step 1: Initialize calculation variables — 701

Step 2: Initial determination of energy control function after subframe n-1 — 703

Step 3: Initial parameter setting after idle or sleep phase — 705

$E_{average} = E_{average,last}$ ? — 707
yes / no

Step 4: Recalculation of TX decision parameters — 711

Step 5: Estimation of energy control function after subframe n — 709

Step 6: Estimation of energy control function after subframe n+1 — 712

Step 7: Estimation of energy control function after subframe n+2 — 713

Step 8: TX decision for subframe n+3 — 715

717 — n = (n + 1) mod TTI$_{max}$; wait for UL subframe transition;

Was there a sleep phase in between ? — 719
no / yes

Step 9: Determination of energy control function after subframe n-1 — 721

Step 10: After-sleep determination of energy control function after subframe n-1 — 723

Fig. 7

38

**Step 8-1:**
Estimation of available energy for subframe n+3 — 801

**Step 8-2:**
Estimation of DL activity for subframes n+3 and n:
$DL\_act_{est}(n+3)$, $DL\_act_{est}(n)$ — 803

**Step 8-3:**
Estimation of DL energy consumption for subframe n+3 — 805

**Step 8-4:**
Determination of UL parameters for subframe n+3 — 807

**Step 8-5:**
Estimation of $P_{SRS}$ for subframe n+3 — 809

811 — $PUSCH\_act(n+3) = ?$
ELSE — TX
RTX

**Step 8-6:**
Estimation of delta between available energy and platform energy
consumption assuming PUSCH for subframe n+3: $E_{est\Delta}(n+3)$ — 813

$E_{est\Delta}(n+3) = ?$ — 815
ELSE — $\geq E_{low}$
$\geq 0$ AND $< E_{low}$

821 — $PUSCH\_act(n+3) = ?$ — 817 — $DL\_act_{est}(n) = ?$
ELSE — ELSE — off
RTX — inactive

823 — **Step 8-7:**
Estimation of delta between available energy and platform energy
consumption assuming PUCCH for subframe n+3: $E_{est\Delta}(n+3)$

Decision to transmit PUSCH in subframe n+3:
$TX\_dec(n+3) = PUSCH$ — 819

$E_{est\Delta}(n+3) = ?$ — 825
ELSE — $\geq E_{low}$
$\geq 0$ AND $< E_{low}$

$n_{HARQ}(n+3) > 0 ?$ — 826
yes — Decision to transmit PUCCH in subframe n+3 *:
$TX\_dec(n+3) = PUCCH$ — 827
no

839 — $SRS\_act(n+3) = ?$ — 829
on — **Step 8-8:**
Estimation of delta between available energy and platform energy
consumption assuming SRS only for subframe n+3: $E_{est\Delta}(n+3)$ — 831
off

**Step 8-9:**
Estimation of UL energy consumption assuming no UL transmission for
subframe n+3

$E_{est\Delta}(n+3) = ?$ — 833
ELSE
$\geq E_{low}$

Decision to suppress UL subframe n+3:
$TX\_dec(n+3) = off$

Decision to transmit SRS only in subframe n+3:
$TX\_dec(n+3) = SRS$ — 835

841 — Forward TX decision $TX\_dec(n+3)$ to LTE L1 NS — 837

Fig. 8

**EP 2 427 001 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6760311 B
- US 6064857 A
- EP 1755236 A1
- WO 2010127725 A1